# EUROPEAN PATENT SPECIFICATION

(11) **EP 4 616 310 B1**
(45) Date of publication and mention of the grant of the patent: **22.07.2026**
(21) Application number: 23809720.8
(22) Date of filing: 13.11.2023
(51) Int. Cl.: G06F 21/60, G06F 21/62

(54) **FACILITATING SECURE USER ACCESS**
ERMÖGLICHUNG EINES SICHEREN BENUTZERZUGRIFFS
FACILITATION D'ACCÈS SÉCURISÉ À UN UTILISATEUR

(30) Priority: 11.11.2022 GB 202216842
(43) Date of publication of application: 17.09.2025
(73) Proprietor: TEFOGO LTD, London WC2H 9JQ (GB)
(72) Inventor: KNIGHT, Jonathan, London WC2H 9JQ (GB); DUISENOV, Talgat, London WC2H 9JQ (GB)
(74) Representative: ip21 Ltd
(86) International application number: PCT/GB2023/052965
(87) International publication number: WO 2024/100425

(56) References cited:
- WO-A1-2010/045456
- US-A1- 2018 268 342
- KAMI BROOKS ED - ASSOCIATION FOR COMPUTING MACHINERY: "Migrating to role-based access control", PROCEEDINGS 4TH. ACM WORKSHOP ON ROLE-BASED ACCESS CONTROL. FAIRFAX, VA, OCT. 28 - 29, 1999; [ACM ROLE-BASED ACCESS CONTROL WORKSHOP], NEW YORK, NY : ACM, US, 28 October 1999 (1999-10-28), pages 71 - 81, XP058388436, ISBN: 978-1-58113-180-2, DOI: 10.1145/319171.319178

## Description

### Technical Field

This disclosure relates to the facilitating secure user access, in particular within and across organisations such as hospitals. More specifically, the invention relates to methods and systems for sharing and maintaining user credentials using a "library" mechanism that determines the level of user access to equipment.

### Background

Many organisations such as hospitals take security measures to restrict access to: use of medical devices, secure or hazardous areas, or medical storage, to users with valid credentials. Such measures can be bureaucratic and inflexible, particularly in emergency or shortage situations. To improve efficiency of existing systems, methods using digital credentials have been suggested. For example, it is common to find computer implemented systems that can process and store data relating to employee learning and development - training attended, courses and qualifications achieved. However, to access a variety of equipment within an organisation, existing software systems can be impractical. For example, it would be cumbersome to require each staff member to carry a digital credential for each piece of physical equipment that is made by a different manufacturer. Furthermore, existing systems are only designed to work purely within a single organisation or entity. Staff members would not be able to transfer their credentials between different organisations, meaning that equipment would lock them out even when they are suitably qualified but lack credentials at that particular organisation.

There are also software systems for capturing industry-wide learning credentials, where a unified standard is achieved, and a digital record is kept on a single digital system. What the technical approaches taken by these known systems are not capable of, is the processing and distributing of differing learning frameworks aligned to common overarching standards.

This means that in industries that have non-standardised (often vocational) training, it is challenging to transfer comparable training that an individual has completed between separate organisations. The desire to do so is there, although the technical approach taken by existing systems is not capable of doing so. Technical challenges include finding efficient ways to compare non-standardised data.

Data protection and corporate confidentiality are also far more of an issue when trying to share data between organisations. This can be handled relatively easily within a single organisation or training standard, although systems working across organisations and jurisdictions demand a more innovative approach in order to comply with legal obligations. There is a desire for any such system to overcome information governance restrictions, including but not limited to:
- Maintaining the privacy of individual's data, in line with their consent, local organisation policies and the data privacy laws of the relevant jurisdictions. Note that these will not just impact the individual holding the learning credential, but any named assessor whose data may also need to be associated with the credential.
- Protecting the confidentiality of corporate information and proprietary training standards, with permissions granted only to acceptable third-parties while not revealing the presence of either party without consent.
- Complying with the data protection of local jurisdictions and their restrictions on what data is able to be transferred outside their jurisdiction, and optionally any domiciliation requirements of organisations.

A further problem with known systems is that access to equipment is inflexible in that a user would be granted access, or not, to a particular machine or drug storage. This binary approach is quite restrictive; a more flexible approach is needed in practice, where different levels of secure user access are granted based on user credentials.

Innovation can be found in the way in which these problems have been addressed.

US 2018/0268342 A1 is relevant prior art.

### Summary

The scope of the invention is defined by the independent claims.

Aspects of the present invention are set out by the claims. Further aspects are also described The presents aspects can assess whether individual users looking to access equipment have satisfied local competencies, within and across organisations such as a hospital. Disclosure is provided of different organisations each storing local competencies, with these local competencies being mapped to master competencies that are stored centrally. Disclosure is provided of a way of "passporting" aligned but differing competencies for individuals across discrete organisations.

### Statements

As a first aspect, disclosure is provided of a method of facilitating user access to equipment. The method comprises: receiving from a first organisation, a selection of a type of organisation that is to have access to one or more library; assessing whether a second organisation corresponds to the type of organisation that has been selected by the first organisation; authorising the second organisation to have access to the one or more library if it is assessed that the second organisation corresponds to the type of organisation that has been selected by the first organisation; providing the second organisation with an offer to access the one or more library, if the second organisation is authorised to access the one or more library; verifying whether the second organisation has accepted the offer to access the one or more library; and notifying the first organisation to grant user access to the equipment, if the second organisation has accepted the offer to access the one or more library.

A 'library' represents one or more storage devices for storage of data such as user competencies representing credentials. User access may be granted, for example, to operate a piece of equipment, access a restricted area, or access digital data such as patient records, although the method is not limited to such implementations.

A technical effect of this innovation is that a central system can facilitate the distribution of data between organisations. This central system can be implemented using one or more computer server (for example, an on-premise server or a cloud service), with the computer server facilitating a new way of distributing a library. Thus, host organisations can choose whether to share their competency libraries with other organisations, and so the technical effect is achieved irrespective of whether another organisation is granted access to the library. An efficient way is provided for a computer to run more efficiently and function more effectively in order to ensure that host organisations comply with their duty to maintain confidentiality and user access is granted securely. A problem of circumventing the duty to comply with confidentiality obligations is achieved by giving the host organisation control of the types of organisations that are permitted access to its libraries, as well as ensuring that the host organisation is aware of which other organisations have access to their libraries.

An individual user's credential is unique to that individual, and is portable - meaning that it can be used with other organisations that this user works for. However, credentials can only be assigned, validated, renewed and revoked by organisations. Individuals cannot gain access to libraries or maintain their own records outside of an organisation. In this way the integrity of those credentials is assured, as organisation can only access credentials from libraries they have been provided access to following the mechanisms outlined above, and all user credentials have the assurance of the library author plus the employing organisation. This is also advantageous for organisations wishing to share their library standards, as they are able to do so with a small number of authorised organisations rather than needing to verify and maintain oversight over a large number of individuals directly.

Advantageously, the method allows for digital credentials to be implemented across organisations, without the user having to carry a digital credential for each piece of equipment in the organisation that may be made by a different manufacturer. Furthermore, vendors maintaining inventories can benefit by not having to have their credentials adopted, distributed and maintained to all relevant organisations.

Optionally, the method further comprises: storing a master competency; receiving a local competency from the first organisation or the second organisation; and mapping the local competency to the master competency.

There is a demand to reduce the burden of matching local competencies between different organisations. The burden of directly matching the local competencies that are monitored by each organisation increases exponentially as the number of organisations grows. A centralised technique is adopted of using master competencies which correspond to the local competencies. Different organisations can all map their local competencies to the master competencies, in order to ensure consistency.

Processing resources are used effectively by avoiding a comparison of the many different local competencies which are monitored by each organisation. The set of local competencies that is maintained by an organisation can be larger than the set of master competencies that is maintained by the central system. Furthermore, it is possible for the local competencies to be customised.

Optionally, mapping the local competency to the master competency is done: by matching a title of the local competency to a title of the master competency; or by matching a step of the local competency to a step of the master competency.

Manually matching the local competencies to the master competencies is laborious. To reduce the burden on an administrator, the local competencies and master competencies are matched automatically. The system learns from reviews of the matches to improve its accuracy over time. The sensitivity is adjustable to control efficiency and accuracy. This can include natural language processing to interrogate the content of the competencies themselves. Possible ways to map a local competency with a master competency include comparing their titles, or identifying steps that are common to both the local competency and the master competency. As a result of mapping the local competency to the master competency, processing resources are optimised by enabling the assessment of whether the master competency is satisfied, rather than assessing individual local competencies which are monitored by local organisations.

Optionally, the local competency includes one or more variables that allows the local competency to be configured.

There is a demand for the host organisation to have control of the rules of the competency library, while allowing the receiving organisation to configure rules according to local policies. Examples of rules include: a time period that is available to complete a local competency; a pass score that is used to assess whether a local competency has been achieved; a number of times a skill is to be demonstrated in order to achieve a local competency; an expiry period after which a local competency is to be tested again; who is permitted to assess whether a local competency has been satisfied; and whether the local organisation is configured to be uploaded with evidence which demonstrates achievement of a local competency.

The host organisation can set competency library policy rules, which the receiving organisation can configure with variables. This does not conflict with the competency library policy rules that are selected by the host organisation, allowing the host to control distribution of the library.

Optionally, the method further comprises: receiving a tag that has been selected by the first organisation to define the type of organisation that is to have access to the one or more library.

A tag provides a way for the host to control the distribution of the libraries. Within each library, it is possible to select from predefined tags (e.g., country as tag group, with UK and US being tags which may be selected). With custom tags, there is a field that allows the tag to be written locally. A key can serve as a custom tag, allowing individual access to the competencies.

The host may provide a number of tags that allow further refinement of the type of organisations that are to be permitted access to the libraries. The central system provides a number of tags which the host can select from. Furthermore, the host has the opportunity to introduce custom tags, which are tags that are customised by the host, which allows further refinement by the host to the control of the distribution of the libraries.

Optionally, the method further comprises: assigning a tag to the second organisation; and assessing whether the second organisation has been associated with a tag that has been selected by the first organisation.

Collecting verification information about an organisation is labour intensive, subjective and prone to errors. Therefore, there is a demand to provide a reliable way of verifying an organisation in an efficient manner.

External services can be used to match characteristics of the organisation, by assigning tags to the third party organisation. The system learns from corrections that are made to the tagging, to improve the accuracy of tagging in future. These tags are used to assess whether the organisation corresponds to the type of organisation that was selected by the host to be permitted access to the library. It is possible for an administrator to correct tagging that has been performed by an external service.

Optionally, the method further comprises: obtaining information about the second organisation from an external source; and assigning the tag to the second organisation based on the information obtained from the external source.

Tags may be deemed untrustworthy if they are manually assigned by a third party organisation themselves. Therefore, tagging is carried out automatically by the system. This is done by verifying a range of external sources.

Optionally, host organisations are provided clear criteria to select from, in order to determine what type of organisation should be permitted access to the library. There is a demand to simplify the way in which receiving organisations are matched with tags. Tag groups allows for flexibility of conditions and fine-tuning of characteristics.

Advantageously, this allows for different levels of restrictions to be used. For example user access may be granted to operate a devices in a supervised or restricted manner for users with lower standards of credentials. In a further example, specific sections (e.g. cabinets or drawers) of digital storage solutions may be linked to specific credentials from the library. This represents a flexible control solution to enable users operate devices in a secure manner.

Optionally, a plurality of selections are received from the first organisation, where each selection identifies a type of organisation that is to have access to a library of a plurality of libraries that is hosted by the first organisation.

Organisations may wish to set different sharing rules for different competency libraries that they publish. The default arrangement is for tags to be assigned to the organisation itself. However, further control is achieved by allowing tagging of a library itself. Each organisation can make multiple competency libraries, and for each of these libraries, the organisation can select a type of organisation that is to be permitted to access that library. Each library can be tagged by the host to identify the type of organisation that is allowed access to that library. Access to each library is customised by allowing specific rules which establish whether that library can be distributed.

Optionally, authorisation of the second organisation is performed by checking whether the second organisation has published a text file to a domain that is associated with the second organisation.

To ensure that the host has control of the distribution of their libraries, there is a demand for a way to determine whether the receiving organisations (and their representative users) can be trusted. A way is provided to authenticate third party organisations. New users representing organisations are authenticated by verifying their email address or by reviewing their domain records. Verifying that the user is from the second organisation can be achieved by the user publishing a text file to the domain that is associated with the second organisation (and its representative users). This text file demonstrates that the new user is associated with the domain that corresponds to the second organisation. This domain forms the basis of further authentication.

Optionally, the method further comprises: storing one or more rule that determines whether access is permitted to the one or more library; and restricting access to the one or more library if one or more rule determines that access is not permitted to the one or more library.

Rules are in place to regulate the distribution of libraries. These rules can be provided by the host organisation, a receiving organisation, or a regulator. The host organisation can provide rules to restrict access to confidential information. The receiving organisation can provide rules to restrict access to user data that is stored on a database of the receiving organisation, depending on whether the user has provided consent for their information to be shared. A regulator can provide rules to restrict the sharing of information, both, within a single jurisdiction and between different jurisdictions, which ensures that both the host and recipient are not in breach of any specific local rules or cross-border data sharing rules. Rules can be applied directly within a local jurisdiction, and across jurisdictions, with rules processed on local servers based within those jurisdictions.

Optionally, the method further comprises: storing a hierarchy which determines how a plurality of rules is to be interpreted; interpreting the plurality of rules to determine whether access is permitted to the one or more library; and restricting access to the one or more library if the interpreting of the plurality of rules determines that access is not permitted to the one or more library.

A hierarchy is provided, so that rules that have higher importance are given precedence. This provides a way to prevent any conflict between the rules. Combining jurisdictional rules, organisational rules and personal data privacy consent can result in blanket exclusion of information, or accidental seepage of protected information or confusion for users. For example, a default rule of rejecting access to the library might be imposed, with this default rule being overruled by an exception to the default, with the possibility of this exception itself being further overruled by a further exception.

Having hierarchical rules simplifies the way in which the rules are implemented. Applying a hierarchy to different data tables and entries allows the consent of each party to be applied individually and collectively, ensuring that all data rules are respected while maximising the useful information that is available to third parties.

Many organisations have a policy of running single-tenanted instances of software. Benefits of a single-tenancy arrangement include enhancing security by restricting access to a limited number of people, increasing dependability by dedicating resources to a single client, and allowing customisation by permitting full control of the environment. A hierarchy is provided of what information can be revealed by a single-tenanted database. With only one organisation on server, this data is protected by keeping it isolated, with it being easy to destroy the data by physical or software-based means. However, a single-tenanted instance doesn't allow competencies to be shared with a central server. There is a demand for a way for access to the library system to still work, even when the organisation is a single tenant of the server. A balance is to be found between ensuring compliance with local rules such as jurisdictional requirements, while also benefiting from wider competency sharing capabilities. This can be achieved by establishing single-tenanted databases and instances alongside the multi-tenanted setups, whilst still complying with local and inter-jurisdictional rules.

Optionally, the method further comprises: reviewing a user that becomes associated with the second organisation, to assess whether an existing competency that has been assigned to the user corresponds to a local competency that is assessed by the second organisation; and determining whether the existing competency is a direct match to the local competency, wherein if the existing competency is a direct match then the existing competency is imported by the second organisation, with the user being permitted to continue with their existing competency.

Organisations record whether users have achieved individual competencies. Resources are saved if the competencies are not repeated or duplicated where an existing standard already exists that is either directly comparable or indirectly comparable. Reducing the number of competencies stored in the system enhances efficiency, because it avoids competencies being created where an acceptable equivalent already exists. A rule engine checks existing competencies against competencies that are allowed by a new organisation. Where possible, the rule engine either allows direct usage of the existing competency, or augments it with conditional acceptance.

Optionally, the method further comprises: matching the existing competency of the user with a master competency that corresponds to the one or more library stored by the first organisation; determining whether a first rule permits an acceptance of the master competency, wherein if the first rule permits the acceptance of the master competency, then the existing competency is imported by the second organisation, with the user being permitted to continue with their existing competency; determining whether a second rule permits a rejection of the master competency, wherein if the second rule permits the rejection of the master competency, then the existing competency is not imported by the second organisation; and determining whether a third rule permits a conditional acceptance of the existing competency, wherein if the third rule permits the conditional acceptance of the existing competency, then the user completes conditional conversion of the local competency, to allow the existing competency to be used in the second organisation.

When a user joins an organisation, they may already satisfy existing competencies. If these existing competencies are a direct match to local competencies which are assessed by the organisation, then it is possible for the existing competency to be imported, so that the existing competency continues to be associated with the user. Furthermore, it is possible for the existing competency to be indirectly comparable with the local competency, in which case it is determined by the organisation whether the existing competency should be accepted or rejected.

Furthermore, it is possible that the existing competency may be beyond the judgement of the system or any over-arching rule. In this case, the rule engine is configured to perform conditional conversion of the existing competency. Reliability is enhanced by allowing a manual review of the conditional conversion by a supervisor. This manual review by the supervisor provides an extra mechanism which can be performed to assess whether the existing competency can be used.

Optionally, a default position can be chosen for each master competency by the second organisation. This allows the second organisation to determine whether a local competency should be accepted, rejected, conditionally accepted, or reviewed.

Setting rules for accepting third-party competencies can be complicated and different rules may conflict, leading to errors or mistakes. A hierarchical set of acceptance rules allows for any level of customisation that is to be used by the users. A default is available to a higher level of security even if not configured by a local administrator.

As a second aspect, disclosure is provided of a program which, when executed by a computer, causes the computer to perform a method according to the first aspect, including any of its optional features.

As a third aspect, disclosure is provided of a computer-readable storage medium storing a program according to the second aspect.

As a fourth aspect, disclosure is provided of a system configured to facilitate user access to equipment. The system comprises: a receiving unit configured to receive from a first organisation, a selection of a type of organisation that is to have access to one or more library; an assessment unit configured to assess whether a second organisation corresponds to the type of organisation that has been selected by the first organisation; an authorising unit configured to authorise the second organisation to have access to the one or more library if it is assessed that the second organisation corresponds to the type of organisation that has been selected by the first organisation; an offering unit configured to provide the second organisation with an offer to access the one or more library, if the second organisation is authorised to access the one or more library; a verifying unit configured to verify whether the second organisation has accepted the offer to access the one or more library; and a notification unit configured to notify the first organisation to grant user access to the equipment, if the second organisation has accepted the offer to access the one or more library.

Optionally, disclosure is provided of an actuating device within the first organisation configured to receive the notification to the first organisation to grant user access to the equipment, and to effect an actuation of the equipment when the notification is received. Advantageously, the actuating device may be a lock on a door or storage unit for example, or device for locking and locking a piece of equipment.

As a fifth aspect, disclosure is provided of a security system comprising a system as described above. For example, the security system may be a hospital or prison security system.

Optionally, the security system comprises one or more user devices for storing a local competency representing a user credentials. For example, the user device is a mobile phone.

Optionally, the security system comprises one or more verifying devices for communicating with the one or more user devices and for notifying the actuating device. Optionally, the verifying devices are part of the verifying unit. For example, a verifying device may be achieved by fitting an existing device with an RFID chip. In further examples, the verifying device includes a camera and the user device may include a QR code. Advantageously, existing equipment may be modified to allow connectivity with a user device.

Optionally, the security system comprises a restricting unit configured to restrict access to the equipment unless the first organisation has granted access to the equipment. Advantageously, the second organisation will restrict access to the equipment, unless the first organisation has effected actuation of the equipment. As a consequence, the equipment will only be available for use by users who have been assessed as being allowed access to the equipment.

### Brief Description of the Drawings

Embodiments will now be described, by way of example only, with reference to the accompanying drawings, in which:
- FIG. 1A shows an overview flowchart of competency matching through tagging;
- FIG. 1B shows a detailed flowchart of publishing and mapping of competencies when publishing;
- FIG. 1C shows a detailed flowchart of tags being assigned to a new organisation;
- FIG. 2 outlines how tags and tag groups enable anonymous matching;
- FIG. 3A shows an overview flowchart of a new user joining an organisation, and the matching of competencies;
- FIG. 3B shows the configuration of servers across multiple jurisdictions and tenancies;
- FIG. 3C shows the logical layers of rules being applied across the relevant servers;
- FIG. 3D shows a detailed flowchart of rules being applied to determine competency visibility;
- FIG. 4 shows an example of how the rule matching can be mapped;
- FIG. 5 shows an example of the rules being applied to a new user joining an organisation;
- FIG. 6 illustrates a system configured to facilitate user access to equipment; and
- FIG. 7 illustrates a security system configured to enable access to the equipment based upon the validity of a user's credentials.

### Detailed Description

Various exemplary embodiments, features, and aspects are described in detail below with reference to the drawings.

The mechanisms outlined make use of data representing credentials referred to as "competencies" and may equally apply to other learning and development outcomes, including but not limited to as attending training courses (in person and remotely), eLearning and automated assessments, self-assessment, portfolios of work and examinations. Competencies may also be known under other names, including but not limited to skills, proficiencies, competences and capabilities. A competency identifies one or more skills that a user is expected to have in order to be permitted to perform a task. A competency may be specified by a title, together with the one or more skills that the user is expected to have in order to be permitted to perform the task. The title provides a concise statement of the competency that is to be assessed. Each skill provides details of knowledge and experience that the user is expected to have, and how this skill is to be assessed to determine the level of safe user access to equipment. A competency is typically considered achieved if the user has been assessed as satisfying all of the skills that are to be assessed.

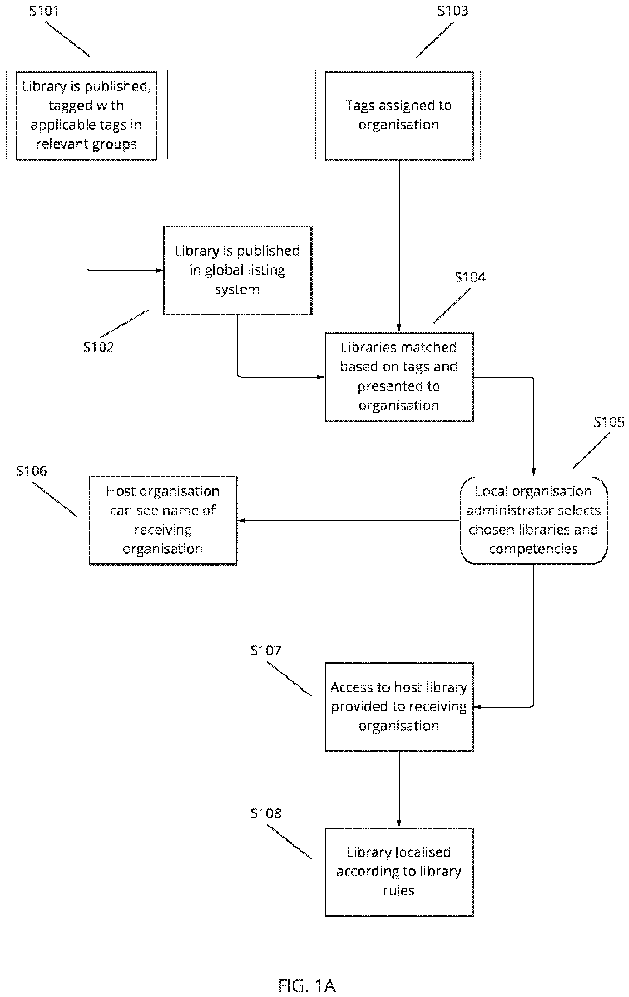

The competencies are maintained through a "library" mechanism which uses a plurality of storage devices. FIG. 1A shows a mechanism by which competency libraries can be shared between organisations without revealing confidential details until mutual sharing is agreed. This mechanism ensures both alignment of standards and maintaining organisational integrity. Accordingly, a method is disclosed which facilitates access to one or more library that is hosted by a host organisation such as a hospital. The one or more library is received by a receiving organisation. The receiving organisation is a type of organisation that has been selected by the host organisation as being permitted to have access to the one or more library. Each organisation can serve as a host organisation (first organisation) or a receiving organisation (second organisation), and so these terms are interchangeable, depending upon which organisation is facilitating access to a library that it hosts. The disclosed method is implemented by a system, which may be a central system configured to execute a software platform such as a user interface. Such a system may be configured as an on premise server or a cloud service. Whilst examples are disclosed with reference to hospital, it would be appreciated that an organisation may be any entity, such as a company, institution (e.g. a prison), or an association, comprising a number of people.

In step S101, a host organisation publishes their standards, which they intend for others to be able to use. A host organisation is defined as one looking to share its standards with other organisations.

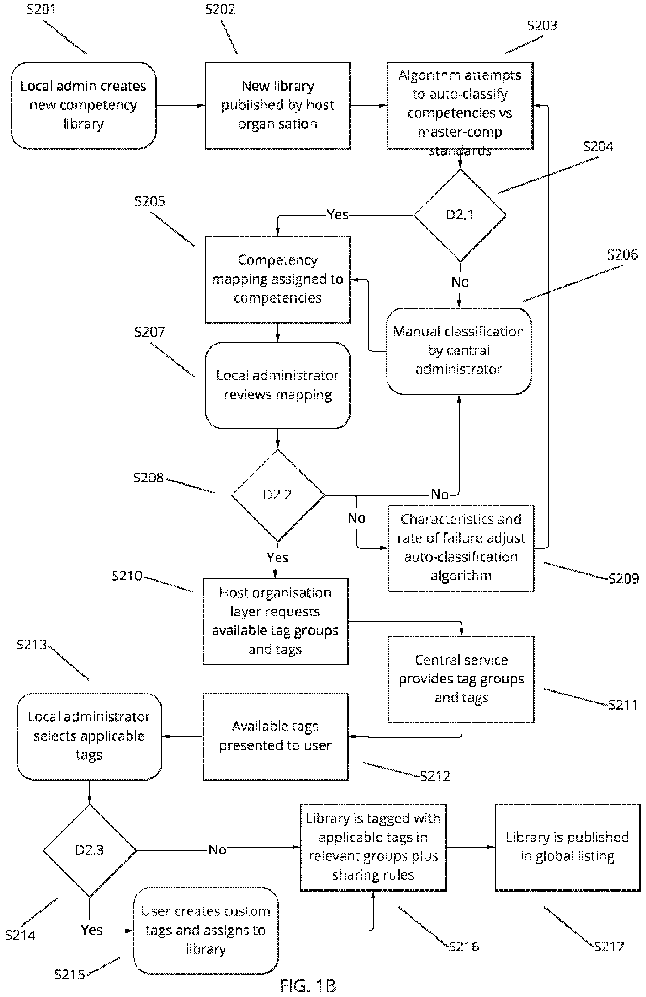

FIG. 1B outlines the detail of the tagging process used in step S101.

In step S201 the local administrator for the host organisation creates their new competency library in the system. Optionally, the organisation can publish updates to the competency library as well as publish a new library.

In step S202 the organisation sharing the competency standard publishes their library of standards. Each library can contain any number of standards. Optionally, any organisation can publish multiple libraries with independent tags and rules. For example, an education publisher may publish one library aimed at the primary school market and one library for the secondary school market, each with different tags to allow targeted distribution of each.

When publishing, the host library administrator includes variables determining the sharing properties of the library:
- if Private_status (Boolean) is set to 1 then the library is kept private to just that organisation, and
- if Tag_visible_only (Boolean) is set to 1 then only tag-matched organisations will see organisation-specific data.

Each library is automatically provisioned with a unique Library_id which is mapped to the Organisation_id, but can be published independent of it.

To avoid individual competency standards being matched on an ad-hoc basis, "master competencies" are created in the system. Each organisation can map their local competencies to any one of the standardised master competencies, ensuring the local competencies gained by individuals across multiple different organisations are capable of being recognised in a standard format across all organisations. System admins have ultimate editorial control of the mapping of master competencies to ensure accuracy of the overall system.

A master competency may be specified by a title, together with the one or more skills that the user is expected to have in order to be permitted to perform the task. To map a local competency to the master competency, it is determined whether their titles are consistent with one another. Furthermore, it is determined whether the local competency includes the one or more skills which are included in the master competency. It is possible for a local competency to include skills which do not fully correspond to the master competency, with the skills specified by the local competency being customised to the local organisation. Furthermore, it is possible for the local competency to include additional skills which are not included in the master competency, in order to further ensure that the users are suitably assessed as complying with tasks that are bespoke to the local organisation.

To illustrate this concept with an example, consider a situation in which there are many different standards used for the insertion of a catheter into a patient - the standards could vary between those used in a specific community hospital, emergency department or care home. Each of these different approaches could be considered a local competency, but all would be recognised by users as local variations on an overall master competency for "insertion of catheter".

Shown in step S203, the software uses a series of characteristics of the competencies in the library to identify the competency, including key word matching of the title and description. Optionally, the system uses Natural Language Processing to attempt to automatically identify the most relevant master competency - against both the master competency details and all other local competencies, including the content and attached information within the competencies to suggest a match. Illustrating this concept for the above example, if a new "insertion of catheter" local competency is created, the system would attempt to match the overall title from both the master competency and other local competencies, but it could also check against other steps that are common across the other local competencies that map to the insertion of catheter master competency but not others. For example, "clean the back of the patient's hand with an alcohol wipe" is a specific assessment step in the new competency that allows it to be reliably matched by the system to other local insertion of catheter competencies and thus to the master competency.

The matching process outputs a score of likely success to this match, shown in step S204. A success threshold score is used to determine (D2.1) either that an automatic mapping is likely to be accurate and should be suggested to the host organisation administrator (proceeding to S205), or is unlikely to be accurate and the competency requires manual review (proceeding to S206). Under step S206, a central administrator of the system will review the output of S203 and manually assign a classification to be presented to the local administrator in S205.

In S207 the local host organisation administrator reviews the mapping and in S208 can decide (D2.2) to accept or reject the assigned classification. The classification algorithm threshold used in S203 is automatically adjusted based on the acceptance rate of the human reviewer in S207, and the learning from this process used to further teach the machine learning algorithm (S209).

Sharing competency libraries saves computer resources by avoiding replication of competency standards across organisations. Furthermore, the sharing of competency libraries enables commercial distribution of proprietary training standards through the platform. The sharing of competency libraries benefits from the use of tight controls to maintain confidentiality and appropriate distribution. An innovative use of tagging attributes is performed within the software, which allows for confidentiality standards to be maintained.

Once the mapping of the competencies within the library is complete, the host organisation software layer requests (step S210) the live tags that have been setup in the central service - this is in the form of a series of Tag_id identifiers, each belonging to a single Tag_group_id.

These tags and tag groups allow organisations to share their competency library directly with multiple external organisations whilst maintaining control of distribution. Advantageously, the use of tags and tag groups allow for tightly controlled distribution whilst maintaining commercial confidentiality. The host organisation is not revealed to the receiving organisation until it is confirmed it matches the standards set by the host organisation, and the receiving organisation is not revealed to the host organisation until they have chosen to use that library.

An example of a Tag_group_id could be "Country", with Tag_id tags within that including "USA", "UK", "Australia" etc. Another Tag_group_id could be "Sector", with Tag_ids of "Private", "Public" and "Charity". In this way, the host organisation may choose to limit distribution organisations that are in the public sector (select Tag_id = "Public" within Tag_group_id = "Sector") and in the UK (select Tag_id = "UK" within Tag_group_id = "Country").

Optionally, specific tag groups can be restricted with additional rules, for example to limit the maximum number of tags from that group can be applied to any one competency library or exclude certain combinations.

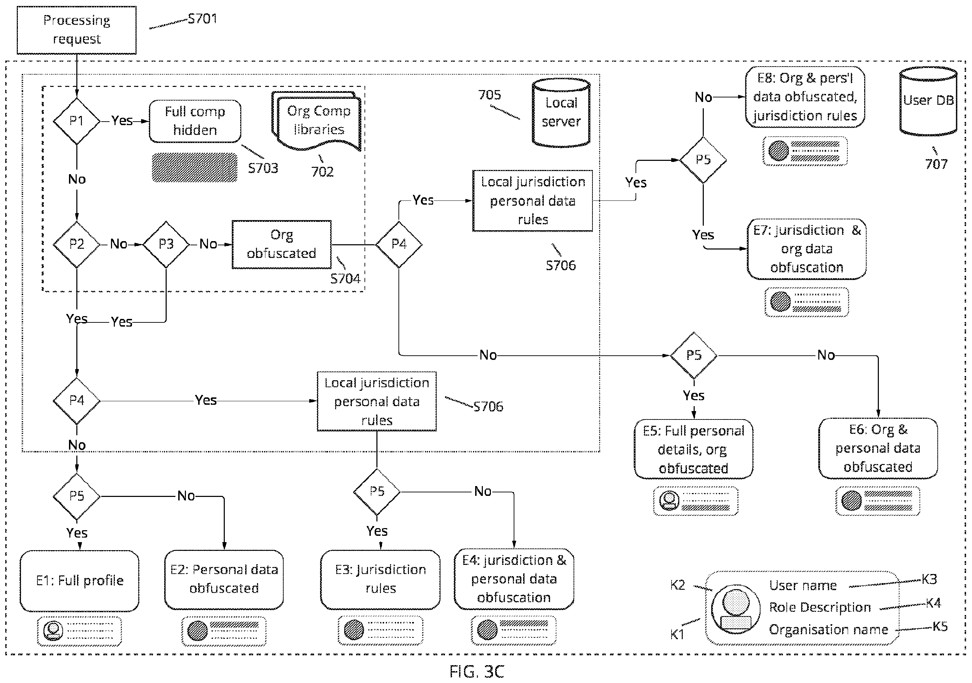

As this is a commercial and operational decision for each organisation using the system, the available tags are checked by the central service (S211) and presented to the local administrator at the host organisation (S212). In step S213, local administrators are able to select the applicable Tag_id with Tag_group_id lists, and can also choose to keep libraries entirely private by not applying any tags. The organisation can also specify its rules for third-party visibility of all competencies, as used in FIG. 3C, rules P2 and P3.

For specific overrides to allow direct mapping between organisations, at step S214 the host organisation can choose to request (D2.3) a unique custom Tag_id under the Override Tag_group_id, which can be shared directly with a receiving organisation. Optionally, this could be included through an eCommerce platform, to enable commercial licensing of proprietary training material.

For example, a commercial training provider could create custom Tag_id in a software application such as Compassly (trade mark), and distribute that Tag_id to organisations who have purchased licences for their wider training course packages. Those purchasing organisations would be able to enter that unique Tag_id against their organisation and gain access to the accompanying competencies in the system. This means that the commercial training provider can align system distribution with other channels, whilst still being able to use the same integrated tagging distribution approach. Alternatively, an Application Programming Interface (API) could be established to directly connected to the competency distribution system in step S215 with the organisation's main commercial distribution platform, to allow automated creation and allocation of custom tags.

In step S216, the system combines any custom tags from S215 with the standard tags selected in S213 and applies the tags to the library, which is then published in the global listing in step S217.

Returning to FIG. 1A, in step S102 the library is then published in the global listing system. To maintain confidentiality, access to the libraries within this system is then restricted based on counter-matching tags. Thus, steps S101-S102 provide a way of receiving from a host organisation, a selection of a type of organisation that is to have access to the one or more library.

In step S103, each organisation is allocated Tag_ids to match with each of the Tag_group_ids available in the system, without revealing the identity of the organisation to non-aligned organisations.

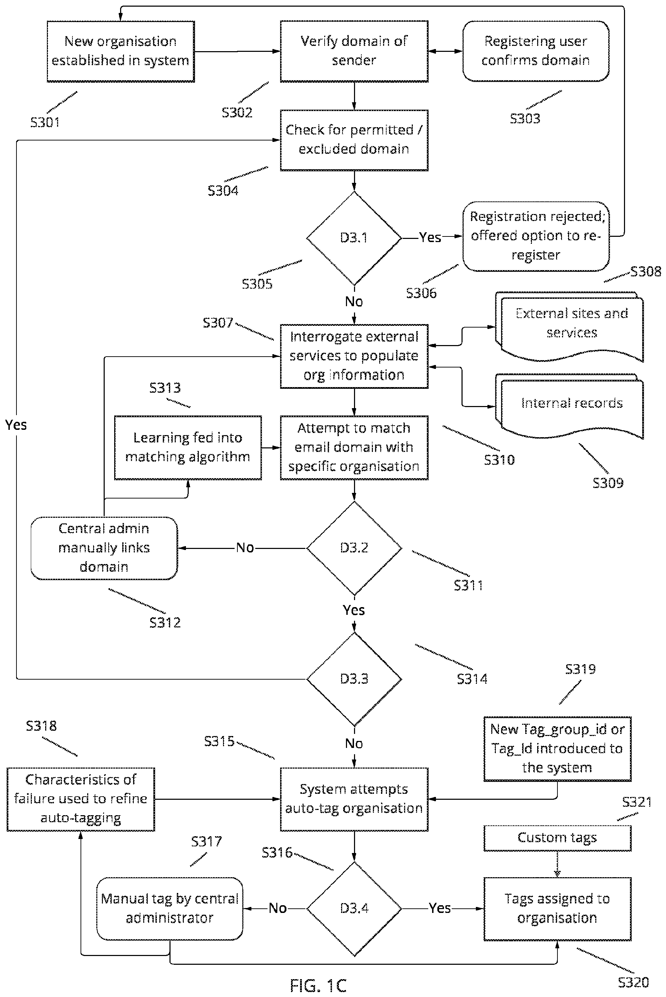

FIG. 1C shows the detailed mechanism by which tags are assigned to new and existing organisations.

When a new organisation is established in the system by the first user registering on behalf of that organisation, it is beneficial for the legitimacy of the email account for the registration to be established, in particular that it is linked to the organisation being registered. This enhances the security of the system by ensuring that the identity of the user is genuine.

After a new user has registered and established a new organisation in the system (step S301), the veracity of the email account is established in step S302 by sending a registration confirmation email with a system-generated key embedded in the URL.

The user confirms the email domain by activating the URL sent (step S303). Optionally, a more rigorous approach of domain verification could be used for S302, such as requiring a designated text (TXT) file to be posted in the domain listing, which would limit applications to users with permission to modify domain settings, rather than just an organisation domain email address. Thus, the text file is published to a domain that is associated with the new organisation, in order to authorise this organisation as a member of the system, in order to allow a user associated with this organisation to have access to the library hosted by the host organisation.

In step S304, the administrative software service checks the domain against a list of domains that have been excluded and decides whether this domain is permitted to be used for establishing an organisation (step S305, with the decision D3.1 of "Reject registration?"). The data on whether to reject a domain is held in a table with each excluded domain holding a unique ID (Excluded_domain_id), the domain and code reason for exclusion. The domain can be stored at the appropriate level - either Top-Level Domain (TLD, e.g..com) or Second-Level Domains (SLD, e.g. example.com). The exclusion list includes any that identified as being non-organisation-specific domain (for example public mail services such as Hotmail.com or Gmail.com), already excluded by existing organisation registrations in step S304, or organisations know to be unsuitable for registration. Advantageously, ensuring the user has verified the domain before carrying out this check prevents malicious or spurious checks on domains in the system. If the registering user has their domain blocked, the system informs them (step S306) and offers them the chance to re-register with a new domain.

Optionally, this stage S304 can flag excluded organisations. For example, sanctioned countries could be excluded based on either specific SLDs or at the highest level with TLD (such as .ru for Russia), or previous security concerns could be listed and automatically blocked.

If the domain is not excluded, then the software layer will interrogate data sources to populate pre-defined information fields on the organisation linked to this domain (step S307). These information providers can include those publicly accessible through Application Programming Interface (API) services or third-party providers requiring commercial arrangements to access API services (step S308). Optionally, this information could be gathered through web scraping, whereby the information can be automatically gathered from external websites without the use of an API. The information captured through these external services is used for both identifying the organisation and attempting to match it to this domain, and for populating the tagging information. Additionally, internal records may be maintained within the system (step S309), populated from external information that cannot be directly linked.

The populated information allows the system to establish (step S310) if the domain represents and can be confidently matched to a unique organisation. In many commercial organisations this will be clear to establish, but multiple public sector organisations often share a single domain (such as .gov.uk or .nhs.net). If the system reviews this information but is unable to automatically identify a single organisation to link to the domain (step S311, with the decision D3.2 of "Able to link domain?"), it will pass the information to a central administrator to review and manually link the organisation, in step S312. The outcome from this administrator review is used to further improve the algorithm used to match domains, step S313. Optionally, the organisation themselves may be able to suggest tags, but these are only used to inform the central administrator, not directly tag the organisation.

As an outcome of the review, the system may optionally determine in step S314 that the identified domain is to be added to the Excluded_domain_id table to prevent other organisations being matched with this unique domain (decision D3.3 as "Exclude domain?").

The information gathered for the organisation in step S307 is then used by the machine learning algorithm to attempt to assign the relevant Tag_ids in each Tag_group in step S315. Advantageously, the use of external verified sources and an auditable algorithmic approach means that the tags assigned can be highly trusted by other users of the system and prevents fraudulent self-tagging by third party organisations. The approach also reduces manual intervention and bias from human administrators.

If the system determines that it is unable successfully apply tags (step S316, with decision D3.4 as "Successfully applied tags?"), then the information is presented to a central administrator to review, step S317. If it is able to successfully apply tags, then these are applied in step S320.

Learnings from the administrator review are used to refine the auto-tagging algorithm in step S318. Optionally, a level of routine audit review can be applied, where a central administrator would be presented with tags assigned by the system and is able to either verify or correct them, to ensure ongoing training of the machine learning system. A machine learning approach is implemented, which includes an initial learning phase which involves the use of a training set being provided, together with a significant initial audit and feedback.

If any new Tag_group_ids or Tag_ids are introduced in the system (step S319), these can be populated against all information using the information held on each organisation. Optionally, the system may periodically refresh the information on all organisations using the external API services, and API services can be expanded to cover any new Tag_group_ids.

The only tags that the organisation themselves are able to assign themselves are those that they have been provided as customer tags (as provided by the step S215 in FIG. 1B), and these can be provided by a local organisation administrator in step S321.

Returning to FIG. 1A, in step S104 the tags assigned by the host organisation are then automatically matched by the central library to each relevant organisation based on the tags and tag groups presented. Thus, steps S103-S104 provide a way of assessing whether a receiving organisation corresponds to the type of organisation that has been selected by the host organisation. Furthermore, step S104 provides a way of authorising the receiving organisation to have access to the one or more library if it is assessed that the receiving organisation corresponds to the type of organisation that has been selected by the host organisation.

The method for accessing library data may be used to grant access to users in a secure and flexible manner. Specifically, access to one or more library is used to determine user access in a variety of scenarios. In a hospital environment, examples include:
- Restricting use of medical devices would be restricted based on the operator's competencies.
   ∘ Examples of these devices include syringe drivers, infusion pumps, respiratory ventilators and continuous positive airway pressure (CPAP), dialysis machines, defibrillators. These are often not currently restricted in any software or hardware manner.
   ∘ This could also include the operation of specific diagnostic and intervention equipment, such as CT, MRI and X-Ray machines, therapeutic laser and ultrasound machines. In most cases this equipment will require a user login to operate, but this is not linked to training records.
- Access to secure or hazardous areas could be restricted by the use of secure magnetic door locks, which will not allow access to users who do not have a current valid training credential.
- Medical consumable storage (including legally restricted access to Controlled Drugs) can be restricted to users with valid credentials.
- Recording patient observations on monitoring equipment (e.g. blood pressure, temperature, blood oxygen) could be restricted to those who know how to use the equipment to ensure accurate measurements.

Advantageously, the mechanism for accessing competency libraries described above may be integrated in a wide range of solutions irrespective of their current setup. To facilitate implementation, the devices need to maintain an active internet connection to be able to check and validate the user's credentials stored in the system.

These may be listed in descending order of physical intervention with the device.

In an example implementation, a device such as user equipment, door lock or storage lock as outlined above is modified to include an RFID reader chip that can establish a connection with a user's mobile device, for example a smartphone, smartwatch, tablet or laptop, which also includes an RFID transmitter chip. The user may bring their mobile device, running a client version of the software, into range of the RFID chip on the device and the device scans for the unique key credential that the system generates to identify that user.

The system can then lookup the exact device and the credentials from the library required to use it, and then compare these to the valid credentials that the user has on their profile. A command can be sent to the device to enable it; if no valid credential for the user exists then the client device would inform the user.

Optionally, this chip could be altered to handle a range of different near-field communication technologies, such as Bluetooth Low Energy.

In an alternative implementation, devices are modified to leverage existing communication technology that already exists in equipment currently in use, through software firmware updates to that equipment:
Example of such connections would include:
- RFID
- Bluetooth connection
- Wi-Fi identification

The mechanism for checking credentials and restricting use on that basis remains the same as above, but is achieved through existing hardware on the device.

Where equipment cannot be modified, the effect can be achieved by linking a unique, registered code to the device. This unique code is coded into a QR code, which is then physically attached to the device (e.g. by printing it on a sticker).

The user who needs to make operate the device can identify the specific device by scanning the unique QR code on that device using the camera on their mobile device, running the client software from the library system. The system is then able to validate the specific credential for the specific device through the library and enable or disable the device.

For systems that already have some sort of login or operator restriction in place, the above approach could be adapted to link into the device through a purely software mechanism. The user links their credential library profile to the login profile for that device through an exchange of API credentials between the central library and the device manufacturer's login. These credentials from the library are then automatically synchronised with the user's login to that device over the internet and checked each time they login to use the device. If the user's credentials are not valid, they will not be able to use the device.

In order to increase flexibility of the methods, implementations are envisaged whereby different levels of restrictions are used, based on user's credentials. By way of example:
- Devices could operate in a supervised or restricted manner for users with lower standards of credentials.
   ∘ Users may only be able to access and view existing settings rather than modify them
   ∘ This could also include requiring escalated user privileges for certain steps, so that a more experienced manager would be required to perform a final check.
- The range of drugs that the user can dispense through a syringe driver can be restricted based on their credentials from the library.
   ∘ This could also include the range of use of drugs that the user does have access to, e.g. hazardous doses of morphine could not be set by users without the full Controlled Drugs credential
- Specific sections (e.g. cabinets or drawers) of digital storage solutions may be linked to specific credentials from the library.

The examples above advantageously provide flexible control solutions to enable users operate devices in a secure manner. For example:
- A blocking bolt may be implemented to prevents drugs being loaded into a syringe driver; this bolt is moved by a solenoid and is only activated once suitable credentials are authenticated.
- Control valves on respirators or pumps may be physically locked in the closed position until the user's credentials are authenticated.
- Power may not be provided to elements of the device without authentication, e.g. to individual syringe drivers in a rack.
- Magnetic door locks may be used to restrict access to secure areas.

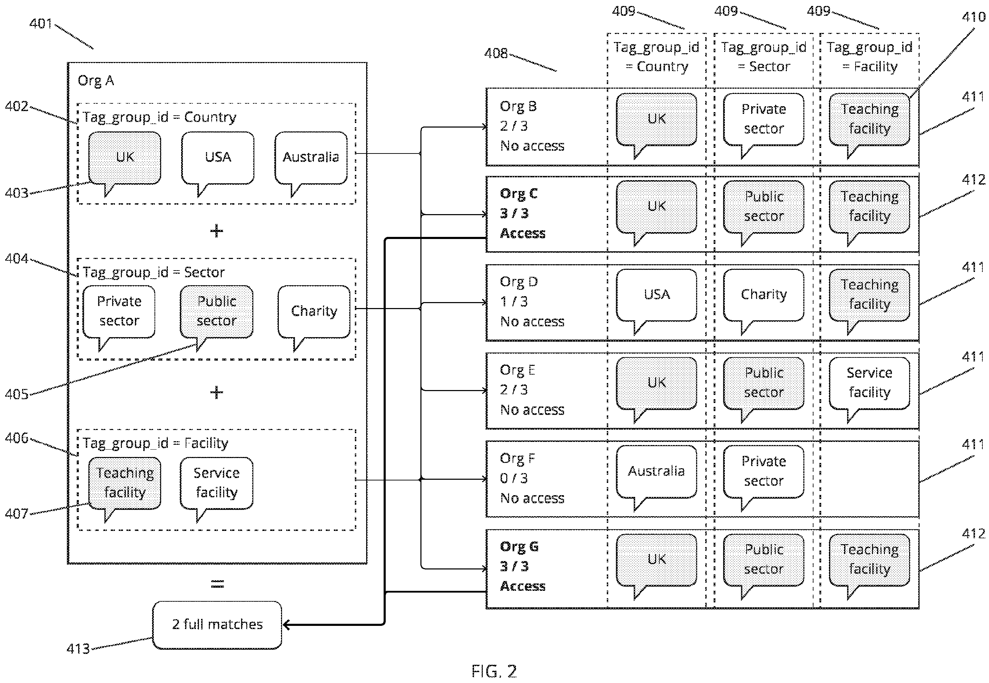

FIG. 2 shows an example of the tagging mechanism in action.

Organisation A (401), a publisher of medical competencies, has chosen to share their competency library and they wish to make it available to all UK-based, public sector teaching facilities. They are offered a range of tags in tag groups and select a combination that matches their requirements. From the Tag_group_id Country (402) they select the country UK (403), from the Tag_group_id Sector (404) they select Public Sector (405), and from the Tag_group_id Facility (406) they select Teaching facility (407). The system matches the combination of tags specified by Organisation A against all the other organisations in the system (408). Each organisation (408) will have its own Tag_id (410) specified in the different Tag_group_id selections (409).

Through this matching process, four organisations have no or only partial matches (411) and two organisations have full matches (412) - Organisation C and Organisation G. The publishing organisation will be informed of the number of matches (413), and once confirmed the competency library created by author Organisation A will now be available to reader Organisations C and G

Optionally, in addition to the logic here shown based on AND logic rules, other logic rules could be included to allow for more specific matching.

Returning to FIG. 1A, in step S105 the local administrator for the receiving organisation is now presented with the available competency libraries only where the tags assigned to their organisation by the process outlined in S103 match those chosen by the host organisation in step S101. The local administrator for the receiving organisation is then able to accept or reject the competency library for use within their organisation (step S105). In other words, the receiving organisation is provided with an offer to access the one or more library, if the receiving organisation is authorised to access the one or more library, with subsequent verification being performed of whether the second organisation has accepted the offer to access the one or more library.

Optionally, the system can be configured for a local organisation to automatically accept or reject any libraries that they are matched through tagging without requiring a local administrator to manually review them.

Optionally, the system can be configured to send a notification (through email, push notification or other communication medium) to the local administrator informing them of new matched libraries available.

Once a receiving organisation has accepted a host organisation's competency library to be used in their environment, the host organisation is informed of the name of the receiving organisation (step S106). Advantageously, this protects the identity of organisations that are eligible to use the host organisation's competency library through tag matching, but choose not to do so.

The receiving organisation is then automatically provided access to the host organisation's competency library (step S107), integrated into the receiving organisation environment.

Optionally, further configuration of the host competency library may be possible by the receiving organisation adjusting variables as set by the host organisation (step S108). Advantageously, this allows for both local optimisation within the receiving organisation's configuration and overall control by the host organisation.

For example, the host organisation may require a range of 2-6 successful demonstrations of a competency, with a default of 3. The receiving organisation can override this default to match local policy requirements, but only within the limit of 1-6. Another example configuration may be the target time to complete a competency; the host organisation may set a range of 6-12 months with a default of 12, allowing a receiving organisation to override the default and set a value of 9 months (within the permitted range of 6-12). Another example configuration could be the expiry duration of a competency, before it is to be renewed; the host organisation may set a range of 1-3 years with a default of 2 years, allowing a receiving organisation to override the default and set a value of 3 years.

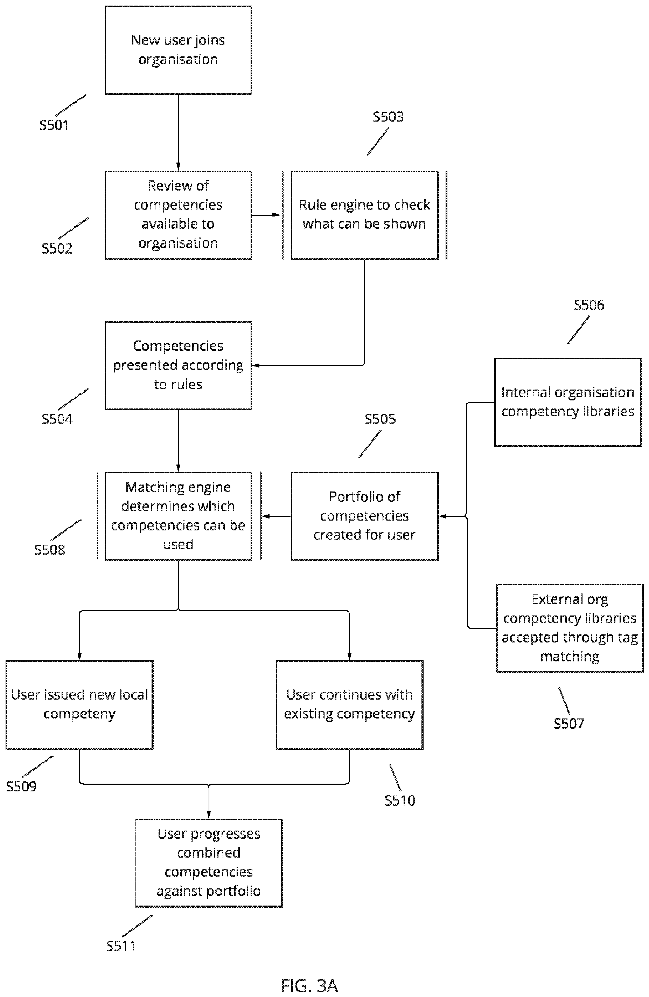

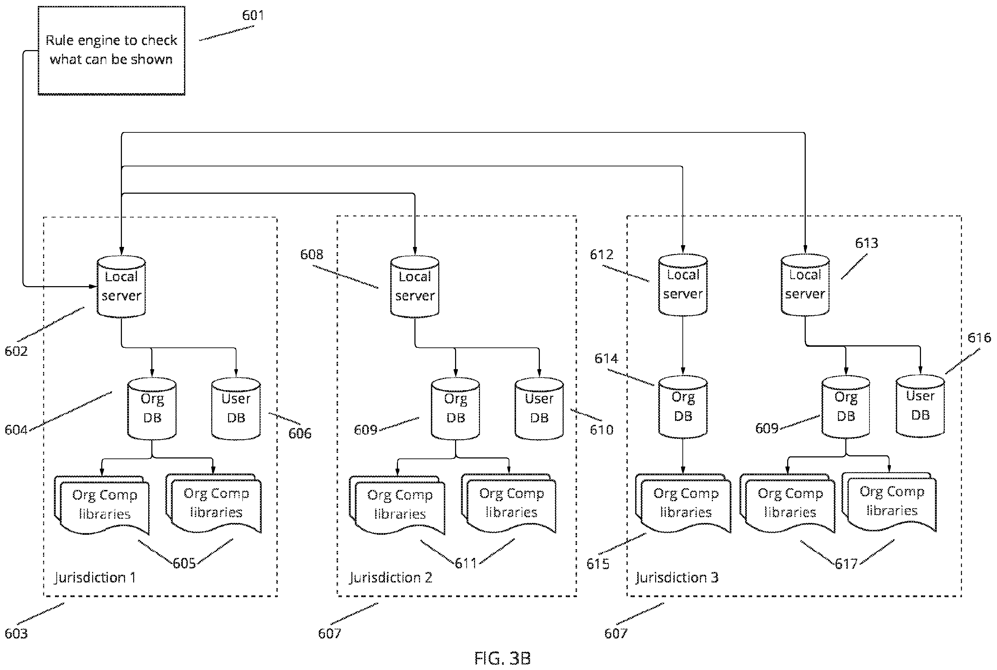

Turning to FIG. 3A, in step S501 when a new user joins an organisation, the software is configured to present historical competency information to that new organisation. Advantageously, this provides assurance of the user's qualifications. However, this is done in compliance with a challenging combination of rules, involving third-party users who assessed the competencies, third-party organisation where they were assessed, and any data privacy rules in any local jurisdictions. In order to do this, the system uses a set of hierarchical rules to show what can be shown to the new organisation. This includes rules on personal privacy and organisational confidentiality, based on the intersection of these three sets of specifications (personal, organisation and jurisdiction). The system first reviews the competencies that the user has which can be made available to the organisation (step S502) and then uses a rule engine to determine what information about a competency is permitted to be shown (step S503 in FIG. 3A; 601 in FIG. 3B).

The technical approach to enabling this is detailed in FIG. 3B.

The rule engine processes the initial request on the local server (602) for the jurisdiction that the organisation is based in (603). Any privacy laws impacting the sharing of personal data can be stored on this local server and applied before the data is shared, even within this jurisdiction. The server is also able to interrogate the rules for other organisations in that jurisdiction (604) stored in a multi-tenanted database - these rules are set when the library is published or updated (see step S216 in FIG. 1B). Each jurisdiction local server can host multiple organisations and multiple competency libraries, and optionally each organisation can set the rules at either organisation or competency library level (605). The local server (602) will also check the consent rules provided by each individual user registered in that jurisdiction on the user database (606) and check the level of consent they have provided for their personal data to be shared.

If the competency was signed off by a server outside the jurisdiction (607), then the local server is able to send the request to the local server in the relevant jurisdiction (608) and check with the organisational databases (609), user database (610) and competency libraries (611). This allows for data sharing policy rules to be applied between the two jurisdictions in line with local data privacy laws for that jurisdiction plus any data sharing agreements specifically applicable to the two local jurisdictions interacting.

For example, a competency signed off in France (608) may allow for the personal data of the users who signed it off to be shared within the European Union, and therefore if the request for the information came from a server in the jurisdiction of Germany (602) then the server would allow for personal data to be shared (subject to individual user consent). However, if the same request was sent from the server in Germany (602) to a server in the USA (613), the data sharing rules may block the transfer of personal data to comply with local legislation, irrespective of personal consent.

Advantageously, a jurisdiction may have multiple local servers (612 and 613) with mirrored policy laws, allowing for organisations to host single tenanted application and database instances (612 and 614), and any number of competency libraries (615 and 617). This configuration means that organisation can maintain full security control of the single tenanted database but still be able to access the competency library sharing mechanism and portability of users and competencies across organisations and jurisdictions. To enable this portability of users, the user database is maintained on the main local server within that jurisdiction (616).

For example, an organisation within the USA may wish to setup their own instance on a single-tenanted local server (612). All of their organisation's data could be maintained on their database (614) for their security and assurance, but they would still be able to share competency libraries from other local organisations (617) or other jurisdictions (605 and 611).

How these rules impact what can be shown to the user is illustrated in FIG. 3C.

Different rules are applied to both the competency itself and the individuals involved in the sign-off of each competency. Therefore each competency sign-off datapoint (K1) could contain a mix of personally sensitive data, such as profile picture (K2) or name (K3), organisationally sensitive data such as the name of the organisation (K5) or information that is not considered sensitive on its own, such as the user's role description at that organisation (K4). Pieces of this information may also be subject to local jurisdiction rules; as an example, these rules may not allow the sharing of images of a person's face (K2) outside the jurisdiction, but have no such restriction on their name (K3).

When a processing request comes in (step S701), the first layer of approval is processed and in the control of the host organisation of the competency library (702).

If the owner of the library has set a competency library to private (P1) by setting Private_library Boolean to 1 then no information about that competency can be shared with other organisations, and no further rules are processed (step S703).

The organisation can also choose (P2) to make visibility of the organisation itself dependent on tag matching (as covered in step S104 in FIG. 1A). If this configuration flag (Tag_match_visibility, Boolean) is set to 1 and the requesting organisation does not tag match (P3), then the competency details will be visible, but the organisation itself will be obfuscated (step S704).

The next layer of rules is applied to all organisations at the Local server level (705) and apply to all library and user data stored on this server. The local server will be configured to enable local rules if applicable (P4), and these rules will match both within jurisdiction personal data privacy requirements and cross-jurisdiction privacy requirements, as determined by the jurisdiction source of the request. Such rules could include protection of specific personal information or consent requirements from individuals (and further rules based on that consent), and would be automatically applied (step S706).

Once organisational and jurisdiction rules have been applied, the user database in each jurisdiction is checked (707) for the personal data preferences required by each applicable user (P5). These user consents are then applied on top of any relevant previous layers to confirm the full set of information that can be provided to the new organisation for each user involved in the assessment and validation of a competency.

Advantageously, this approach can present any combination of organisation and personal data that the rules at each level impose, whilst processing those rules within the relevant jurisdictions and even single organisational tenancies to comply with local and corporate information and security standards.

In the most open case, where there are no org restrictions (P1=No, P2=Yes or P3=Yes), no local rules jurisdiction rules apply (P4=No) and the user provides full consent (P5=Yes), then the full profile of the user is provided (E1). On the other hand, if the user does not provide consent (P5=No) then their personal data will be obfuscated (E2). Similarly, in a scenario when there no org restrictions (P1=No, P2=Yes or P3=Yes), but there are local jurisdiction rules on personal data (P4=Yes) applied at step S706, then even if the user has provided consent (P5=Yes) the system will apply those rules to what can be seen (E3) - and if the user does not provide consent (P5=No) then this will be combined with their consent preferences (E4).

If the organisation allows for use of its competency (P1=No) but only anonymously (P2=No and P3=No) then the organisation is obfuscated (step S704). If there are no local jurisdiction rules on personal data (P4=No) then if the user consents (P5=Yes) it is possible for full user profile details to be shared, but with the organisation obfuscated (E5). In cases where the user does not provide consent (P5=No) then both the personal data and organisation data will be obfuscated (E6). Local jurisdiction rules can be layered on top of this (P4=Yes), meaning these are also applied even if the user provides consent (P5=Yes), leading to organisation obfuscation and local jurisdiction rules (E7). The user's personal consent (P5=No) can further be applied, leading to organisation and personal data obfuscation in addition to local jurisdiction rules (E8).

Returning to FIG. 3A, the results of the rule engine shown in FIG. 3B and FIG. 3C are presented to the new organisation (step S504). These presented competencies (including the details of the users who approved them), with appropriate privacy and confidentiality protection applied, are then checked against the competencies that are to be assessed for each user, thereby creating a portfolio of competencies for each user (step S505). The competencies used by the organisation can include competencies that the organisation has available that are directly stored in the internal organisation competency library (step S506), as well as competencies for which the organisation has been granted access through the tag matching approach outlined in FIG. 1A (step S507).

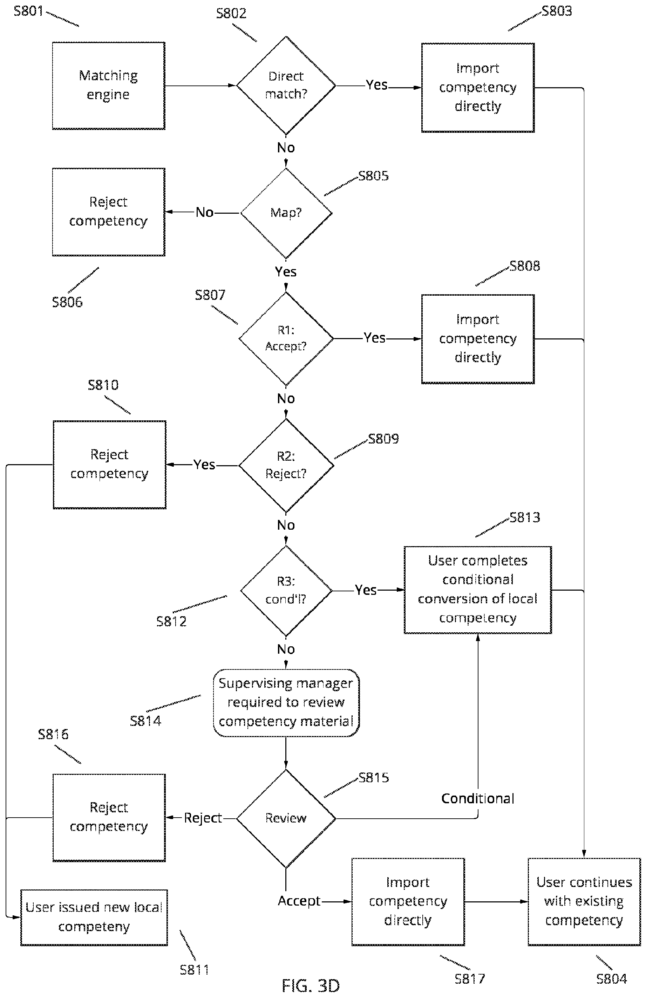

The matching engine in step S508 determines whether the user's existing competencies can be used in the new organisation against the portfolio requirements. The logic of the matching engine is further illustrated in FIG. 3D.

The system's matching engine (step S801) will first look for a direct match in the same competency library (step S802) - if the user has exactly the same local competency as the organisation is using. If yes, the existing competency and progress can be imported directly to that portfolio (step S803), and the user can continue their progress with that existing competency (S804). If there is no direct match, the system will look to match (step S805) through alignment with a master competency (as assigned in FIG. 1B). If no master competency match is found, then there is no basis for further matching and the existing competency is rejected and not imported (step S806).

If the competency can be matched back to a corresponding master competency at step S805, then a series of rules is then applied. The first rule (R1) is an automatic acceptance, step S807; if this can be applied for this competency then the user's existing competency is directly imported and used in the new organisation (step S808). If the competency is not automatically accepted, the system then checks the next rule (R2) as to whether the competency can be automatically rejected (step S809); if this rule is applied then the competency is not accepted (step S810).

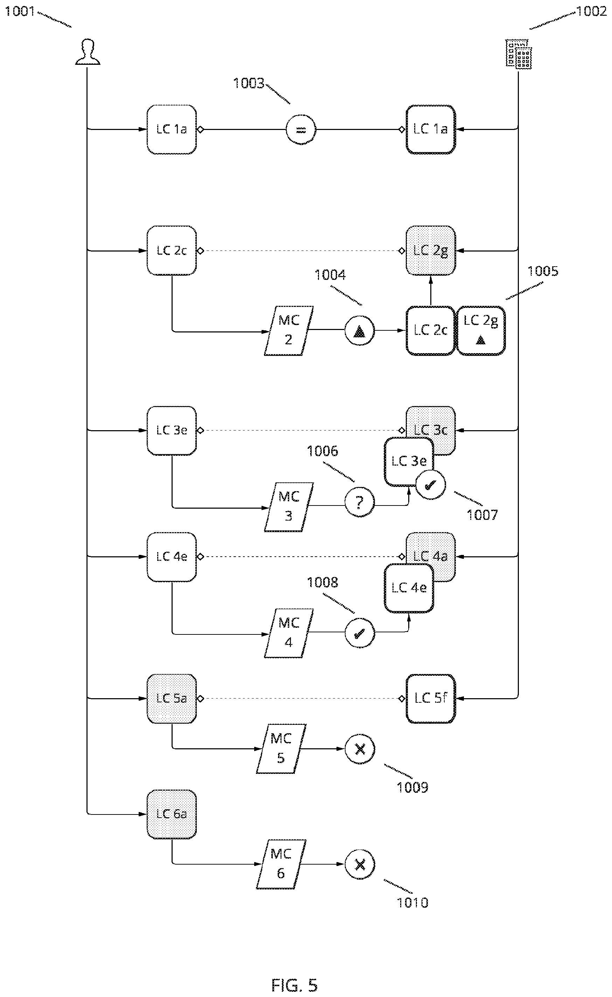

In addition to the competency not being accepted (step S810), the system will automatically allocate a new local competency to the user, in order to fulfil the specifications of the portfolio allocated (step S811). Thus, if an existing competency can't be used, then a new one is issued. This ensures that the user can be assessed on that competency (an example of this is provided in FIG. 5, for which feature 1009 illustrates that if LC 5a can't be used, then LC 5f is issued to match the competencies that the user is expected to demonstrate).

If neither an automatic acceptance nor rejection is in place, then the system will use the next rule (R3) to assess whether to provide a conditional acceptance (step S812). The organisation can put in place (at either an organisation-wide or competency-specific level) a set of conversion steps (step S813). As a result of this rule (R3), the organisation may identify steps that are to be performed by the user in order to convert their existing local competency, so that it is recognised as being satisfied by their new organisation.

As an example of how a competency can be converted for use in the local organisation (step S813), the user may be obliged to demonstrate the competency once on the local organisation equipment. The competency is accepted and can continued to be used in the user's portfolio, although it will show as provisional until the conversion is completed. When the conversion of the local competency has been completed, the user's portfolio shows that the competency is accepted, and is no longer shown as being provisionally accepted (step S804).

The final scenario, if none of the other rules apply, is to allow the supervising manager to review the existing competency (step S814). The supervisor can then make one of three decisions (step S815):
- Firstly, the supervisor can reject the competency (step S816), in which case the user is issued a new local competency (step S811).
- Secondly, the supervisor can conditionally accept the competency, in which case the user completes the conditional conversion (step S813).
- Thirdly, the supervisor can accept the competency, in which case that competency is imported directly (step S817) and the user can continue to use it (step S804).

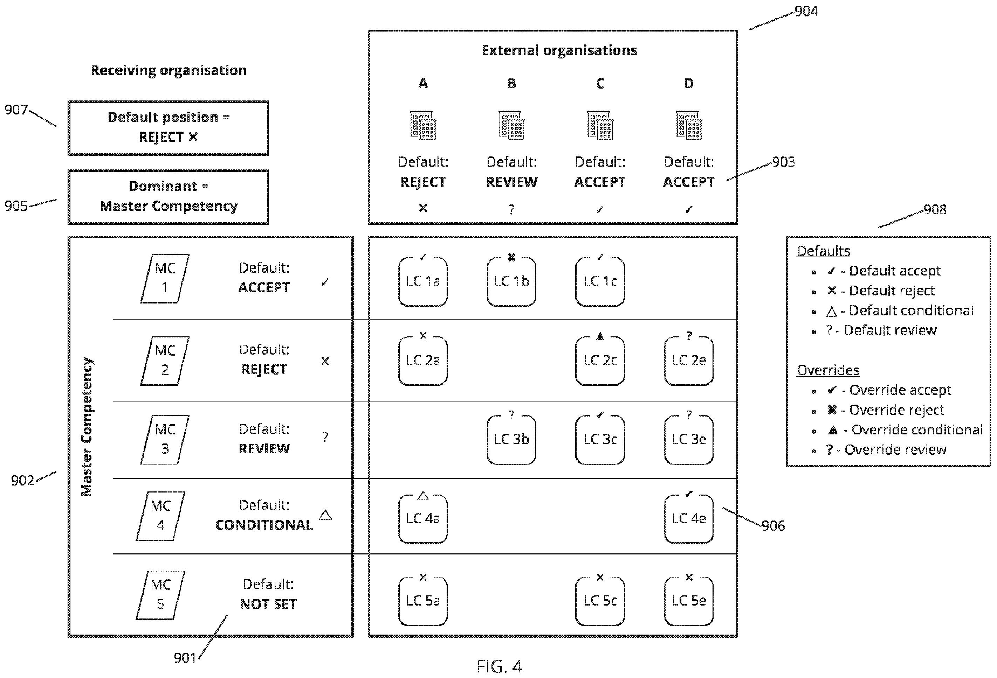

The configuration of these rules is powered by a set of decisions that the local administrator for each organisation can implement - shown in FIG. 4.

A receiving organisation can choose to set a default position (901) for each Master Competency (MC) (902) and a default position (903) for each External organisation (904). This position can be set as Accept, Reject, Conditional or Review, in line with the decision tree shown in FIG. 3D. The system will apply these rules to infer a position for each Local Competency (LC).

For example, a prison service may wish to enforce the use of its own restraint competencies, and therefore set the rule (901) for that Master Competency to Reject, thus ensuring that any member of staff joining automatically has any existing Local Competency from another organisation rejected and is issued with a new Local Competency in line with that own organisation's standards. In another example, a construction organisation may recognise that the standards provided by a national construction training body are of a consistently high standard and set a default position (903) to always accept competencies gained from that organisation.

Advantageously, organisations can choose to set these rules as "Competency dominant" or "Organisation dominant" (905). If there is a conflict between the combination of rules for any specific local competency, this setting would determine which is applied.

For example, if an organisation set the rule for Master Competency as "Allow" but for a specific Organisation as "Block", with a "Competency dominant" flag, the competency would be allowed, but with a "Organisation dominant" flag the competency would be blocked.

Optionally, organisation administrators can also set manual rules at the specific Local Competency level (906). Any rule set at this level will override both Competency level and Organisation level rules, and this allows fine control of specific local competencies.

For example, a community hospital as the receiving organisation may have set an organisation rule (903) that automatically accepts all competencies from the local teaching hospital, because they have assurance that all users trained to that standard have achieved a suitably high standard. However, they may set a rule to override the specific competency that relates to the use of defibrillators to not accept that competency from that teaching hospital because they use a different model of defibrillator and users would be expected to retrain to be authorised to use the defibrillators in the community hospital. They could do this by applying a specific Master Competency rule (901) to reject all local competencies for the defibrillator master competency, but if they wanted finer control based on knowledge of the specific equipment used in different organisations then they can override with a local override (906).

Optionally, organisation administrators can set a default position to apply when no other rules apply (907). For security reasons, this default position defaults to "Reject", but this can be changed by the administrator.

For example, an organisation that wishes to give their local managers a large degree of autonomy may set the default position to "review", which would mean any competency not covered by other rules would automatically be presented to the manager overseeing the new user joining for their review and decision on whether to accept, conditionally accept or reject.

Advantageously, each layer of rules is entirely optional, and the system will work with whatever combination of rules each organisation chooses to implement. A fully hierarchical set of rules can therefore (908) be applied to every local competency with any level of rules set, with both default positions determined by wider rules (901, 903, 905 and 907) or overridden specifically for a local competency (906). This allows each organisation to reach the maximum level of control of security and compliance they desire, while minimising the effort involved for setting up other organisations. This also allows an organisation to have a set of rules that can automatically work with any new Organisation or Master Competency added to the system.

Advantageously, all rules act in accordance with the tagging methodology outlined in FIG. 1A, and the privacy flags set in rules P1 and P2 of FIG. 3C. Competencies that are marked as either fully private or hidden from organisations that are not tag-matched would be hidden and therefore automatically be excluded from these rules.

FIG. 5 shows the rule configuration in FIG. 4 being applied through the process of FIG. 3D.

Consider the situation in which a new user (1001) joins an organisation (1002).

The rule engine is applied in turn to each credential that the user joining presents to the new organisation, with the outcome being used to populate a new set of competencies in the new organisation.

Where the competency standard that the user holds is identical (1003) to that used by the organisation, the user's own competency can be accepted into the new organisation and can continue to be used.

For example, the user may have trained in a nationally approved standard for a fire marshal competency, and if this is exactly the same standard used by the organisation they are joining, then that competency would be accepted and continue to be used.

Competencies that do not match (LC 2c, LC 3e, LC 4e and LC 5a) are then matched through the corresponding Master Competency (MC2, MC3, MC4 and MC5) and the rules set by the organisation are applied.

LC 2c does not match the local competency (LC 2g) used by the organisation, but the system is able to match the user's local competency through the master competency (MC2) and check the rule that the organisation's administrator has set (1004). In this case, a conditional rule has been set, which allows the user to continue to use the competency they have achieved but with an incremental assessment step (1005).

Optionally, the system may analyse the differences between local competencies and automatically create the conversion steps.

In the case of LC 3e, this is not the standard that the organisation uses (LC 3c) but the matching engine rule (through MC 3) allows the supervisor to manually review (1006) the incoming local competency (LC 3e), and here the supervisor has accepted the competency (1007) and LC 3e continues to be used instead of LC 3c.

Additional steps may not be carried out, for example the engine may auto-accept (1008) the local competency (LC 4e) or auto-reject (1009) it (LC 5a) - if rejected, the system will create a new local competency instead (LC 5f).

Note that users may have competencies that do not match to any organisation requirement (LC 6a). Even if they are mapped to a Master Competency, these cannot be matched and are therefore rejected (1010).

Advantageously, the application of the rule engine eliminates any duplication of records, improving efficiency and storage requirements.

Returning to FIG. 3A, the outcome of the matching engine is to only issue new competencies (step S509) when there has been either a non-match or rejection of existing competencies. Where possible, by matching through Master Competencies and applying acceptance, review or conditional acceptance, existing competencies are re-used by the new organisation (step S510). The user will then be authorised to progress with a combined portfolio of new and existing competencies, step S511.

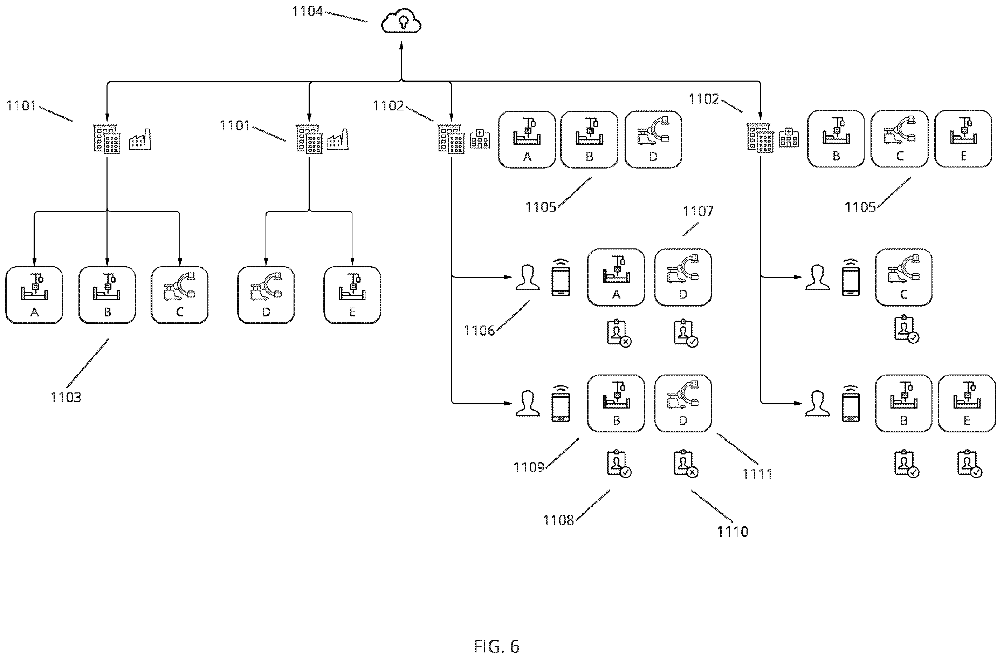

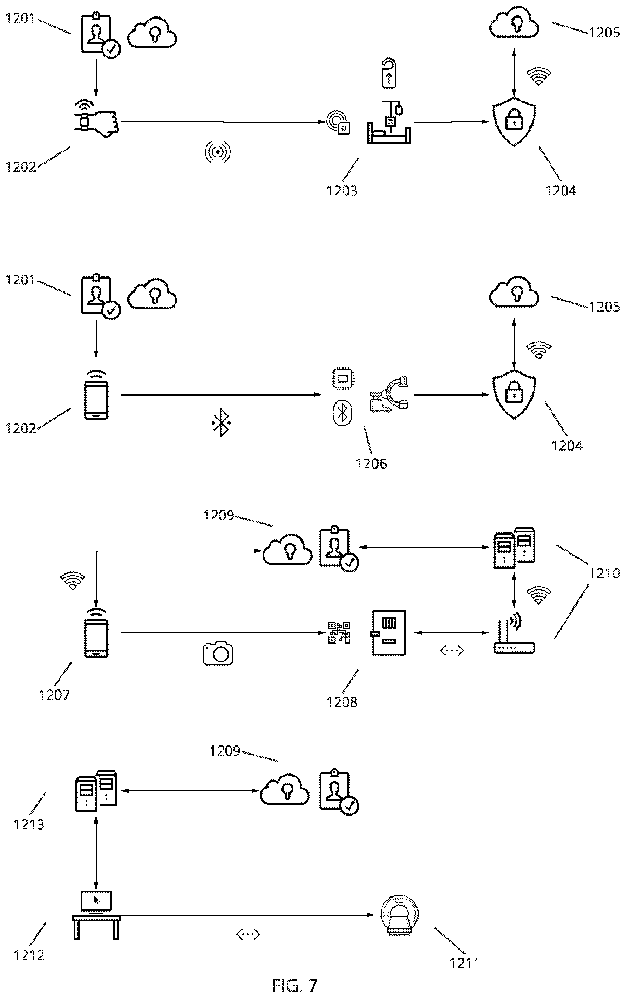

FIG. 6 illustrates a system for which a manufacturer (1101) can determine whether a user (1106) who is based at an organisation (1102) is authorised to have access to the device (1107). If the user (1106) is permitted to have access to the device, then this is achieved at the organisation (1102) using the security system illustrated by FIG. 7. Access to the device is restricted unless the user has been verified to be permitted access to the equipment. As a consequence, this allows for digital credentials to be implemented across organisations, without the user having to carry a digital credential for each piece of equipment in the organisation that may be made by a different manufacturer. Furthermore, vendors maintaining inventories can benefit by not having to have their credentials adopted, distributed and maintained to all relevant organisations.

FIG. 6 illustrates a system configured to facilitate user access to equipment, which demonstrates that the sharing of standards can be between different types of organisations, for example, between manufacturers of equipment and devices (1101) and organisations who use those devices (1102). Here, a manufacturer (1101) of hospital medical devices (1103) is able to share a training credential standard through the library distribution methods described to the hospitals using those medical devices (1102) to a library of stored credentials (1104).

Each hospital can combine different portfolios of devices (1105), including from across multiple manufacturers, to match the devices in use in the organisation. Each individual employee (1106) can then be assigned the relevant selection of device (1107) for their role. As they complete training and are assessed, those personal credentials can be recorded in the central credential record (1104).

Once a user has obtained a valid credential (1108), this can be used to enable the use of the relevant device (1109). That credential is specifically linked to that type of device or other compatible devices, through the library mechanism described previously. If a user does not maintain that training standard or has it invalidated (for example due to misuse of the device), the relevant credential (1110) can be revoked and access to that device (1111) will no longer be possible. Through the library mechanism described, this would apply across other relevant devices and in any other relevant organisations through the sharing of libraries and credentials.

FIG. 7 illustrates a security system configured to enable access to the equipment based upon the validity of a user's credentials. The security system shown in FIG. 7 makes use of the system shown in FIG. 6 for facilitate user access to the equipment.

A user's training records are stored digitally in the library (1201). These can be synchronised with the user's mobile device, for example a mobile phone, tablet or smart watch, equipped with wireless communication technology, such as RFID, Bluetooth or Wi-Fi (1202).

A restricted device, such as an infusion pump, is fitted with a specific built-in RFID chip (1203). To gain access, the user can bring the mobile device within RFID range of the RFID chip in that restricted device. The restricted device then checks the user's credential against its built-in record of valid user training credentials (1204). If the user's library credentials match those required by the restricted device, the restrictions are lifted, and the device is enabled for the user to be able to operate. This may include electronically removing a physical restriction on the device to enable its use. The device's record can be updated over the internet, for example through Wi-Fi, against the central library record of valid training credentials (1205) for this device.

Another method is to use the device's existing wireless connections to validate the library credentials. Here, the restricted device is connected via an existing Bluetooth connection (1206) to the user's mobile device (1202), with credentials validated from the library (1201). In the same way, those credentials are validated locally on the device (1204), with synchronisation carried out against the central library record (1205).

Where the device itself has now wireless radio connection (including by design, for example in secure prison units), the same effect can be achieved through a wired connection. Here the user would use their mobile phone (1207) to take a picture of a QR code that identifies the secure door (1208). That QR code identifies the unique door and passes a request to the library (1209), which is able to validate the user's training credentials against the door requirements. This validation can then be passed, through an Application Programming Interface (API), to the door control server (1210) which can pass the permission to the door to release a magnetic lock and open the door. This may be via an on-premises server directly connected to the door, or a cloud-based server connected via the internet.

When restricted devices are already accessed via a computer, the authentication and lifting of restrictions can be done through software. Here the user would access the user control interface, for example for an MRI machine (1211) through a connected computer (1212). The user would authenticate through that system's user management platform (1213), with an API then able to directly reference the user's credentials from the library (1209), and enable access to the restricted device based upon the validity of the user's credentials in the library.

The disclosed examples can be realised by a computer of a system or apparatus. These examples can be implemented by any device configured to execute instructions, or any dedicated hardware that is capable of carrying out all or a portion of the functionality. Disclosure is provided of hardware (e.g., a processor such as a central processing unit (CPU) or a microprocessor unit (MPU)) configured to read out and executes a program recorded on a memory device to perform the functions of the disclosed examples. For this purpose, the program is provided to the computer for example via a network or from a recording medium of various types serving as the memory device (e.g., a computer-readable medium such as a non-transitory computer-readable medium). The steps of the disclosed methods may be performed in any suitable order, or simultaneously where possible.

Although the disclosed subject matter has been described using specific terminology relating to apparatus features and/or method features, it is to be understood that the claimed subject matter is not necessarily limited to the examples disclosed. The scope of the following claims is to be accorded the broadest interpretation so as to encompass all such modifications and equivalent structures and functions. The advantages disclosed may relate to several of the examples that are disclosed.

## Claims

1. A method of facilitating user access to equipment, the method comprising:
receiving (S101-S102) from a first organisation (401), a selection of a type of organisation that is to have access to one or more library;
assessing (S103-S104) whether a second organisation (408) corresponds to the type of organisation that has been selected by the first organisation (401), by:
obtaining (S307-S308) information about the second organisation (408) from an external source;
assigning (S103, S315-S321) a tag (410) to the second organisation (408) based on the information obtained from the external source; and
assessing (S104) whether the second organisation (408) has been associated with a tag (403, 405, 407) that has been selected by the first organisation (401);
authorising (S104) the second organisation (408) to have access to the one or more library if it is assessed that the second organisation (408) corresponds to the type of organisation that has been selected by the first organisation (401);
providing (S105) the second organisation (408) with an offer to access the one or more library, if the second organisation (408) is authorised to access the one or more library;
verifying (S105) whether the second organisation (408) has accepted the offer to access the one or more library; and
notifying (S106) the first organisation (401) to grant user access to the equipment, if the second organisation (408) has accepted the offer to access the one or more library.

2. The method according to claim 1, further comprising:
storing a master competency (902);
receiving a local competency (906) from the first organisation (401) or the second organisation (408); and
mapping (S101, S202-S213; S508, S801-S817) the local competency (906) to the master competency (902);
and optionally, wherein mapping the local competency to the master competency is done:
by matching (S203) a title of the local competency to a title of the master competency; or
by matching (S203) a step of the local competency to a step of the master competency.

3. The method according to claim 2, wherein:
the local competency includes one or more variable that allows the local competency to be configured (S202; S108).

4. The method according to any preceding claim, further comprising:
receiving (S213) a tag (403, 405, 407) that has been selected by the first organisation (401) to define the type of organisation that is to have access to the one or more library.

5. The method according to any preceding claim, wherein:
a plurality of selections (S202) are received from the first organisation (401), where each selection (403, 405, 407) identifies a type of organisation that is to have access to a library of a plurality of libraries that is hosted by the first organisation (401).

6. The method according to any preceding claim, wherein:
authorisation (S303) of the second organisation (408) is performed by checking whether the second organisation (408) has published a text file to a domain that is associated with the second organisation (408).

7. The method according to any preceding claim, further comprising:
storing one or more rule (S503, 601) that determines whether access is permitted to the one or more library; and
restricting access (S504) to the one or more library if one or more rule determines that access is not permitted to the one or more library;
and optionally, further comprising:
storing (S501) a hierarchy which determines how a plurality of rules is to be interpreted;
interpreting (S503) the plurality of rules to determine whether access is permitted to the one or more library; and
restricting (S504-S508) access to the one or more library if the interpreting of the plurality of rules determines that access is not permitted to the one or more library.

8. The method according to any preceding claim, further comprising:
reviewing (S501-S508) a user that becomes associated with the second organisation (408), to assess whether an existing competency that has been assigned to the user corresponds to a local competency that is assessed by the second organisation (408); and
determining (S802) whether the existing competency is a direct match to the local competency, wherein if the existing competency is a direct match then the existing competency is imported (S803) by the second organisation (408), with the user being permitted to continue with their existing competency (S804);
and optionally, further comprising:
matching (S805) the existing competency of the user with a master competency that corresponds to the one or more library stored by the first organisation (401);
determining (S807) whether a first rule permits an acceptance of the master competency, wherein if the first rule permits the acceptance of the master competency, then the existing competency is imported (S807) by the second organisation (408), with the user being permitted to continue with their existing competency (S804);
determining (S809) whether a second rule permits a rejection of the master competency, wherein if the second rule permits the rejection of the master competency, then the existing competency is not imported (S810) by the second organisation (408); and
determining (S812) whether a third rule permits a conditional acceptance of the existing competency, wherein if the third rule permits the conditional acceptance of the existing competency, then the user completes conditional conversion (S813) of the local competency, to allow the existing competency (S804) to be used in the second organisation (408).

9. A program which, when executed by a computer, causes the computer to perform a method according to any preceding claim.

10. A computer-readable storage medium storing a program according to claim 9.

11. A system configured to facilitate user access to equipment, the system comprising:
a receiving unit configured to receive (S101-S102) from a first organisation (401), a selection of a type of organisation that is to have access to one or more library;
an assessment unit configured to assess (S103-S104) whether a second organisation (408) corresponds to the type of organisation that has been selected by the first organisation (401), wherein the assessment unit is configured to:
obtain (S307-S308) information about the second organisation (408) from an external source;
assign (S103, S315-S321) a tag (410) to the second organisation (408) based on the information obtained from the external source; and
assess (S104) whether the second organisation (408) has been associated with a tag (403, 405, 407) that has been selected by the first organisation (401);
an authorising unit configured to authorise (S104) the second organisation (408) to have access to the one or more library if it is assessed that the second organisation (408) corresponds to the type of organisation that has been selected by the first organisation (401);
an offering unit configured to provide (S105) the second organisation (408) with an offer to access the one or more library, if the second organisation (408) is authorised to access the one or more library;
a verifying unit configured to verify (S105) whether the second organisation (408) has accepted the offer to access the one or more library; and
a notification unit configured to notify (S106) the first organisation (401) to grant user access to the equipment, if the second organisation (408) has accepted the offer to access the one or more library.

12. The system according to claim 11, the system comprising:
an actuating device within the first organisation (401) configured to receive the notification to the first organisation (401) to grant user access to the equipment, and to effect an actuation of the equipment when the notification is received.

13. A security system comprising a system as described in claim 11 or claim 12.

14. The security system according to claim 13, further comprising:
one or more user devices for storing a local competency representing a user credentials;
and optionally, further comprising:
one or more verifying devices for communicating with the one or more user devices and for notifying the actuating device;
and further optionally, wherein the verifying devices are part of the verifying unit.

15. The security system according to claim 13 or claim 14, further comprising:
a restricting unit configured to restrict access to the equipment unless the first organisation has granted access to the equipment.

## Patentansprüche

1. Verfahren zur Erleichterung des Benutzerzugriffs auf Geräte, wobei das Verfahren umfasst:
Empfangen (S101-S102), von einer ersten Organisation (401), einer Auswahl eines Typs von Organisation, die Zugriff auf eine oder mehrere Bibliotheken erhalten soll;
Beurteilen (S103-S104), ob eine zweite Organisation (408) dem Typ der Organisation, die von der ersten Organisation (401) ausgewählt wurde entspricht, durch:
Einholen (S307-S308) von Informationen über die zweite Organisation (408) von einer externen Quelle;
Zuweisen (S103, S315-S321) eines Tags (410) an die zweite Organisation (408) auf der Grundlage der von der externen Quelle bezogenen Informationen; und
Beurteilen (S104), ob die zweite Organisation (408) mit einem Tag (403, 405, 407) verknüpft wurde, das von der ersten Organisation (401) ausgewählt wurde;
Autorisieren (S104) der zweiten Organisation (408) für den Zugriff auf die eine oder mehreren Bibliotheken, wenn beurteilt wird, dass die zweite Organisation (408) dem von der ersten Organisation (401) ausgewählten Organisationstyp entspricht;
Bereitstellen (S105) eines Angebots an die zweite Organisation (408) zum Zugriff auf die eine oder mehrere Bibliotheken, sofern die zweite Organisation (408) zum Zugriff auf die eine oder die mehreren Bibliotheken autorisiert ist;
Überprüfen (S105), ob die zweite Organisation (408) das Angebot zum Zugriff auf die eine oder die mehreren Bibliotheken angenommen hat; und
Benachrichtigung (S106) der erste Organisation (401), dem Benutzerzugriff auf die Geräte zu gewähren, falls die zweite Organisation (408) das Angebot zum Zugriff auf die eine oder die mehreren Bibliotheken angenommen hat.

2. Verfahren nach Anspruch 1, das ferner umfasst:
Speichern einer Masterkompetenz (902);
Empfangen einer lokalen Kompetenz (906) von der ersten Organisation (401) oder der zweiten Organisation (408); und
Zuordnen (S101, S202-S213; S508, S801-S817) der lokalen Kompetenz (906) auf die Masterkompetenz (902);
und optional, wobei das Zuordnen der lokalen Kompetenz auf die Masterkompetenz erfolgt:
durch Abgleichen (S203) einer Bezeichnung der lokalen Kompetenz mit einer Bezeichnung der Masterkompetenz, oder
durch Abgleichen (S203) eines Schritts der lokalen Kompetenz mit einem Schritt der Masterkompetenz.

3. Verfahren nach Anspruch 2, wobei:
die lokale Kompetenz eine oder mehrere Variablen umfasst, mit denen die lokale Kompetenz konfiguriert werden kann (S202; S108).

4. Verfahren nach einem der vorstehenden Ansprüche, das ferner umfasst:
Empfangen (S213) eines Tags (403, 405, 407), das von der ersten Organisation ausgewählt wurde (401), um der Typ der Organisation zu definieren, die Zugriff auf die eine oder mehrere Bibliotheken erhalten soll.

5. Verfahren nach einem der vorstehenden Ansprüche, wobei:
eine Vielzahl von Auswahlen (S202) von der ersten Organisation (401) empfangen wird, wobei jede Auswahl (403, 405, 407) einen Typ von Organisation identifiziert, die Zugriff auf eine Bibliothek aus einer Vielzahl von Bibliotheken erhalten soll, die von der ersten Organisation gehostet wird.

6. Verfahren nach einem der vorstehenden Ansprüche, wobei:
die Autorisierung (S303) der zweiten Organisation (408) durchgeführt wird, indem geprüft wird, ob die zweite Organisation (408) eine Textdatei in einer Domäne veröffentlicht hat, die mit der zweiten Organisation (408) verknüpft ist.

7. Verfahren nach einem der vorstehenden Ansprüche, das ferner umfasst:
Speichern einer oder mehrerer Regeln (S503, 601), die bestimmen, ob der Zugriff auf die eine oder mehrere Bibliotheken gestattet ist; und
Beschränkenden des Zugriffs (S504) auf die eine oder mehrere Bibliotheken, wenn eine oder mehrere Regeln feststellen, dass der Zugriff auf die eine oder mehrere Bibliotheken nicht gestattet ist;
und optional ferner umfassend:
Speichern (S501) einer Hierarchie, die festlegt, wie eine Vielzahl von Regeln zu interpretieren ist;
Interpretieren (S503) der Vielzahl von Regeln, um festzustellen, ob der Zugriff auf die eine oder mehrere Bibliotheken gestattet ist; und
Einschränken (S504-S508) des Zugriffs auf die eine oder mehrere Bibliotheken, wenn bei der Interpretation der Vielzahl von Regeln festgestellt wird, dass der Zugriff auf die eine oder mehrere Bibliotheken nicht gestattet ist.

8. Verfahren nach einem der vorstehenden Ansprüche, das ferner umfasst:
Überprüfen (S501-S508) eines Benutzers, der der zweiten Organisation verknüpft wird (408), um zu beurteilen, ob eine dem Benutzer zugewiesene bestehende Kompetenz einer lokalen Kompetenz entspricht, die von der zweiten Organisation (408) bewertet wird; und
Feststellen (S802), ob die vorhandene Kompetenz eine direkte Übereinstimmung mit der lokalen Kompetenz entspricht, wobei, falls die vorhandene Kompetenz eine direkte Übereinstimmung darstellt, die vorhandene Kompetenz von der zweiten Organisation (408) importiert wird (S803), wobei es dem Benutzer gestattet ist, mit seiner bestehenden Kompetenz fortzufahren (S804);
und optional ferner umfassend:
Abgleichen (S805) der vorhandenen Kompetenz des Benutzers mit einer Masterkompetenz, die der einer oder mehreren von der ersten Organisation (401) gespeicherten Bibliotheken entspricht;
Feststellen (S807), ob eine erste Regel eine Annahme der Masterkompetenz zulässt, wobei, wenn die erste Regel die Annahme der Masterkompetenz zulässt, die bestehende Kompetenz von der zweiten Organisation (408) importiert wird (S807), wobei es dem Benutzer gestattet ist, mit seiner bestehenden Kompetenz fortzufahren (S804),
Feststellen (S809), ob eine zweite Regel eine Ablehnung der Masterkompetenz zulässt, wobei, wenn die zweite Regel die Ablehnung der Masterkompetenz zulässt, die bestehende Kompetenz nicht von der zweiten Organisation (408) importiert wird (S810); und
Feststellen (S812), ob eine dritte Regel eine bedingte Annahme der bestehenden Kompetenz zulässt, wobei, wenn die dritte Regel die bedingte Annahme der bestehenden Kompetenz zulässt, der Benutzer schließt die bedingte Umwandlung (S813) der lokalen Kompetenz ab, damit die bestehende Kompetenz (S804) in der zweiten Organisation (408) genutzt werden kann.

9. Programm das, wenn es von einem Computer ausgeführt wird, den Computer veranlasst, ein Verfahren gemäß einem der vorstehenden Ansprüche auszuführen.

10. Computerlesbares Speichermedium, auf dem ein Programm gemäß Anspruch 9 gespeichert ist.

11. System, das so konfiguriert ist, dass es Benutzerzugriff zu Geräten erleichtert, wobei das System umfasst:
eine Empfangseinheit, die so konfiguriert ist, dass sie von einer ersten Organisation (401) eine Auswahl eines Organisationstyps empfängt (S101-S102), der Zugriff auf eine oder mehrere Bibliotheken erhalten soll;
eine Bewertungseinheit, die so konfiguriert ist, dass sie bewertet (S103-S104), ob eine zweite Organisation (408) dem von der ersten Organisation (401) ausgewählten Organisationstyp entspricht, wobei die Bewertungseinheit so konfiguriert ist, dass sie:
Informationen über die zweite Organisation (408) von einer externen Quelle erhält (S307-S308);
der zweiten Organisation (408) auf der Grundlage der von der externen Quelle erhaltenen Informationen ein Tag (410) zuweist (S103, S315-S321); und
bewertet (S104), ob die zweite Organisation (408) mit einem Tag (403, 405, 407) verknüpft wurde, das von der ersten Organisation (401) ausgewählt wurde;
eine Autorisierungseinheit, die so konfiguriert ist, dass sie der zweiten Organisation (408) den Zugriff auf die eine oder mehreren Bibliotheken autorisiert, wenn festgestellt wird, dass die zweite Organisation (408) dem Organisationstyp entspricht, der von der ersten Organisation (401) ausgewählt wurde;
eine Angebotseinheit, die so konfiguriert ist, dass sie der zweiten Organisation (408) ein Angebot für den Zugriff auf die eine oder mehrere Bibliotheken unterbreitet (S105), falls die zweite Organisation (408) autorisiert ist, auf die eine oder mehrere Bibliotheken zuzugreifen;
eine Überprüfungseinheit, die so konfiguriert ist, dass sie überprüft (S105), ob die zweite Organisation (408) das Angebot zum Zugriff auf die eine oder mehrere Bibliotheken angenommen hat; und
eine Benachrichtigungseinheit, die so konfiguriert ist, dass sie die erste Organisation (401) benachrichtigt (S106), dem Benutzerzugriff zu den Geräten zu gewähren, falls die zweite Organisation (408) das Angebot zum Zugriff auf die eine oder mehrere Bibliotheken angenommen hat.

12. System nach Anspruch 11, wobei das System umfasst:
ein Antriebsgerät innerhalb der ersten Organisation (401), die so konfiguriert ist, dass es die Benachrichtigung an die erste Organisation (401) empfängt, um einem Benutzerzugriff auf das Gerät zu gewähren, und eine Betätigung des Geräts bewirkt, wenn die Benachrichtigung empfangen wird.

13. Sicherheitssystem, das ein System gemäß Anspruch 11 oder Anspruch 12 umfasst.

14. Sicherheitssystem nach Anspruch 13, das ferner umfasst:
ein oder mehrere Benutzergeräte zum Speichern einer lokalen Kompetenz, die Benutzeranmeldeinformationen darstellt;
und optional ferner umfassend:
ein oder mehrere Überprüfungsgeräte zur Kommunikation mit dem einen oder den mehreren Benutzergeräten und zum Benachrichtigen des Antriebsgeräts;
und ferner optional, wobei die Überprüfungsgeräte Teil der Verifizierungseinheit sind.

15. Sicherheitssystem nach Anspruch 13 oder Anspruch 14, das ferner umfasst:
eine Beschränkungseinheit, die so konfiguriert ist, dass sie den Zugriff auf die Geräte beschränkt, es sei denn, die erste Organisation den Zugriff auf die Geräte gewährt hat.

## Revendications

1. Procédé destiné à faciliter l'accès utilisateur à un équipement, le procédé comprenant :
recevoir (S101-S102), de la part d'une première organisation (401), une sélection d'un type d'organisation destiné à avoir accès à la une ou plusieurs bibliothèques ;
évaluer (S103-S104) si une deuxième organisation (408) correspond au type d'organisation qui a été sélectionné par la première organisation (401), en :
obtenant (S307-S308) des informations sur la deuxième organisation (408) auprès d'une source externe ;
attribuant (S103, S315-S321) un tag (410) à la deuxième organisation (408) sur la base des informations obtenues de la source externe ; et
évaluant (S104) si la deuxième organisation (408) a été associée à un tag (403, 405, 407) qui a été sélectionné par la première organisation (401) ;
autoriser (S104) la deuxième organisation (408) à accéder à la une ou plusieurs bibliothèques si l'évaluation conclut que la deuxième organisation (408) correspond au type d'organisation qui a été sélectionné par la première organisation (401) ;
procurer (S105) à la deuxième organisation (408) une offre d'accès à la une ou plusieurs bibliothèques, si la deuxième organisation (408) est autorisée à accéder à la une ou plusieurs bibliothèques ;
vérifier (S105) si la deuxième organisation (408) a accepté l'offre d'accès à la une ou plusieurs bibliothèques ; et
notifier (S106) à la première organisation (401) d'accorder l'accès utilisateur à l'équipement, si la deuxième organisation (408) a accepté l'offre d'accès à la une ou plusieurs bibliothèques.

2. Procédé selon la revendication 1, comprenant en outre:
stocker une compétence maîtrisée (902) ;
recevoir une compétence locale (906) de la première organisation (401) ou de la deuxième (408) ; et
faire correspondre (S101, S202-S213 ; S508, S801-S817) la compétence locale (906) à la compétence maîtrisée (902) ;
et, en option, dans lequel la mise en correspondance de la compétence locale avec la compétence maîtrisée est effectué :
en faisant correspondre (S203) un titre de la compétence locale à un titre de la compétence maîtrisée ; ou
en faisant correspondre (S203) une étape de la compétence locale à une étape de la compétence maîtrisée.

3. Procédé selon la revendication 2, dans lequel :
la compétence locale comprend la une ou plusieurs variables qui permettent la compétence locale d'être configurée (S202 ; S108).

4. Procédé selon l'une quelconque des revendications précédentes, comprenant en outre :
recevoir (S213) un tag (403, 405, 407) qui a été sélectionné par la première organisation (401) pour définir le type d'organisation destiné à avoir accès à la une ou plusieurs bibliothèques.

5. Procédé selon l'une quelconque des revendications précédentes, dans lequel :
une pluralité de sélections (S202) est reçue de la première organisation (401), chaque sélection (403, 405, 407) identifiant un type d'organisation destiné à avoir accès à une bibliothèque parmi une pluralité de bibliothèques hébergées par la première organisation (401).

6. Procédé selon l'une quelconque des revendications précédentes, dans lequel :
l'autorisation (S303) de la deuxième organisation (408) est effectuée en vérifiant si la deuxième organisation (408) a publié un fichier texte sur un domaine associé à la deuxième organisation (408).

7. Procédé selon l'une quelconque des revendications précédentes, comprenant en outre :
stocker une ou plusieurs règles (S503, 601) qui déterminent si l'accès est autorisé à la une ou plusieurs bibliothèques ; et
restreindre l'accès (S504) à la une ou plusieurs bibliothèques si une ou plusieurs règles déterminent que l'accès à la une ou plusieurs bibliothèques n'est pas autorisé ;
et, en option, comprenant en outre :
stocker (S501) une hiérarchie qui détermine comment une pluralité de règles doit être interprétée ;
interpréter (S503) la pluralité de règles pour déterminer si l'accès est autorisé à la une ou plusieurs bibliothèques ; et
restreindre (S504-S508) l'accès à la une ou plusieurs bibliothèques si l'interprétation de la pluralité de règles détermine que l'accès n'est pas autorisé à la une ou plusieurs bibliothèques.

8. Procédé selon l'une quelconque des revendications précédentes, comprenant en outre :
examiner (S501-S508) un utilisateur qui devient associé à la deuxième organisation (408), afin d'évaluer si une compétence existante qui a été attribuée à l'utilisateur correspond à une compétence locale évaluée par la deuxième organisation (408) ; et
déterminer (S802) si la compétence existante correspond exactement à la compétence locale, dans laquelle, si la compétence existante correspond exactement, alors la compétence existante est importée (S803) par la deuxième organisation (408), l'utilisateur étant autorisé à continuer avec sa compétence existante (S804) ;
et, en option, comprenant en outre :
mettre en correspondance (S805) la compétence existante de l'utilisateur avec une compétence maîtrisée qui correspond à la une ou plusieurs bibliothèques stockées par la première organisation (401) ;
déterminer (S807) si une première règle autorise l'acceptation de la compétence maîtrisée, dans laquelle, si la première règle autorise l'acceptation de la compétence maîtrisée, la compétence existante est alors importée (S807) par la deuxième organisation (408), l'utilisateur étant autorisé à continuer avec sa compétence existante (S804),
déterminer (S809) si une deuxième règle autorise le rejet de la compétence maîtrisée, dans lequel, si la deuxième règle autorise le rejet de la compétence maîtrisée, alors la compétence existante n'est pas importée (S810) par la deuxième organisation (408) ; et
déterminer (S812) si une troisième règle autorise une acceptation conditionnelle de la compétence existante, dans laquelle, si la troisième règle autorise l'acceptation conditionnelle de la compétence existante, l'utilisateur effectue alors la conversion conditionnelle (S813) de la compétence locale, afin de permettre l'utilisation de la compétence existante (S804) au sein de la deuxième organisation (408).

9. Programme qui, lorsqu'il est exécuté par un ordinateur, amène l'ordinateur à mettre en œuvre un procédé selon l'une quelconque des revendications précédentes.

10. Support de stockage lisible par ordinateur stockant un programme selon la revendication 9.

11. Système configuré pour faciliter l'accès utilisateur à un équipement, le système comprenant :
une unité de réception configurée pour recevoir (S101-S102) d'une première organisation (401) une sélection d'un type d'organisation destiné à avoir accès à une ou plusieurs bibliothèques ;
une unité d'évaluation configurée pour évaluer (S103-S104) si une deuxième organisation (408) correspond au type d'organisation qui a été sélectionné par la première organisation (401), l'unité d'évaluation étant configurée pour :
obtenir (S307-S308) des informations sur la deuxième organisation (408) auprès d'une source externe ;
attribuer (S103, S315-S321) un tag (410) à la deuxième organisation (408) sur la base des informations obtenues auprès de la source externe ; et
évaluer (S104) si la deuxième organisation (408) a été associée à un tag (403, 405, 407) qui a été sélectionné par la première organisation (401) ;
une unité d'autorisation configurée pour autoriser (S104) la deuxième organisation (408) à avoir accès à la une ou plusieurs bibliothèques si l'évaluation conclut que la deuxième organisation (408) correspond au type d'organisation qui a été sélectionné par la première organisation (401) ;
une unité de proposition configurée pour fournir une offre (S105) à la deuxième organisation (408) d'accès à la une ou plusieurs bibliothèques, si la deuxième organisation (408) est autorisée à accéder à la une ou plusieurs bibliothèques ;
une unité de vérification configurée pour vérifier (S105) si la deuxième organisation (408) a accepté l'offre d'accès à la une ou plusieurs bibliothèques ; et
une unité de notification configurée pour notifier (S106) à la première organisation (401) d'accorder l'accès utilisateur à l'équipement, si la deuxième organisation (408) a accepté l'offre d'accès à la une ou plusieurs bibliothèques.

12. Système selon la revendication 11, le système comprenant :
un dispositif d'actionnement au sein de la première organisation (401) configuré pour recevoir la notification adressée à la première organisation (401) pour accorder l'accès utilisateur à l'équipement, et pour actionner l'équipement lorsque la notification est reçue.

13. Système de sécurité comprenant un système tel que décrit dans la revendication 11 ou la revendication 12.

14. Système de sécurité selon la revendication 13, comprenant en outre :
un ou plusieurs dispositifs utilisateur destinés à stocker une compétence locale représentant des identifiants utilisateur ;
et, en option, comprenant en outre :
un ou plusieurs dispositifs de vérification destinés à communiquer avec le ou les dispositifs utilisateur et pour notifier le dispositif d'actionnement ;
et, en outre, en option, dans lequel les dispositifs de vérification font partie de l'unité de vérification.

15. Système de sécurité selon la revendication 13 ou la revendication 14, comprenant en outre :
une unité de restriction configurée pour restreindre l'accès à l'équipement à moins que la première organisation n'ait accordé l'accès à l'équipement.
